# EUROPEAN PATENT APPLICATION

(11) **EP 1 494 112 A1**
(43) Date of publication of application: **05.01.2005**
(21) Application number: 04101965.4
(22) Date of filing: 06.05.2004
(51) Int. Cl.: G06F 3/033, G06F 3/00

(54) **Control device for an electronic apparatus with tactile sensation ball**

(30) Priority: 28.05.2003 FR 0306475
(71) Applicant: ITT MANUFACTURING ENTERPRISES, INC., Wilmington, Delaware 19801 (US)
(72) Inventor: Bricaud, Hervé, 39100, DOLE (FR)
(74) Representative: Kohn, Philippe

(57) **Abstract**

The invention proposes a device comprising a shaft (32L) driven in rotation by a manual member and a toothed control pinion (44L) characterized in that it comprises electromagnetic means (160L) which, when they are energized, apply an electromagnetic field to the signals generator pinion (44L) in such a way as to attract and/or to retain the control pinion in a determined angular position, and in that their energizing is triggered by the generation by the pinion (44L) of a control signal corresponding to a determined state of the controlled apparatus, so as to afford the user a tactile sensation corresponding to the arising of this state.

## Description

The present invention relates to a control device, having tactile sensation.

The present invention relates in particular to a control device of the type commonly known as a "trackball" or else a mouse.

Numerous exemplary embodiments of such a device applied in particular to the control of a cursor on a screen of a so-called portable computer are known.

There are various designs for the driving of the shafts by the ball, in particular by friction or by magnetic coupling.

Various designs have also been proposed for each signals generator which are for example of the type with wiper-contact coding wheel, of the electro-optical type or of the electromagnetic type or else of the Hall-effect type.

The choice between the various designs of drive and of signals generators makes allowance in particular for the accuracy desired, the reliability and the possibilities of integration as a function of the electronic apparatus with which the control device is associated. The electrical consumption of the device in its standby or rest state is also an important parameter of this choice in so far as this consumption may be particularly high in the case of electro-optical coding systems.

The requirement for a compact control device of very small dimensions making it possible to move a cursor over a screen, and/or to scroll menus (scanning), also referred to as a "navigator", is ever more important in apparatuses of the "portable telephone" or "personal digital assistant" type offering ever more functions and services calling in particular upon choices offered on one or more screens, in a manner similar to the use of a portable computer.

It is moreover desirable to be able to employ at least one entry button which the user presses in order to enter (select) a choice corresponding to the position reached by the cursor on the screen by manipulation of the ball. Moreover, the planned increase in the dimension of the screens, of the order of 40 by 80 mm, makes it necessary to employ a very effective navigator making it possible in particular to move accurately in all directions, and not only in the conventional two orthogonal directions of investigation.

These requirements are further enhanced when the control device or navigator is used within the framework of a game.

The tactile sensation transmitted by the device to the user of the navigator is a very important parameter in respect of the performance thereof and the ergonomics thereof.

The sensitivity of the user's touch is such that it allows him to perceive very fine variations, discrete or continuous, and that it is thus possible to transmit a very complex "message" to the user's finger or hand.

The finger is thus an issuer of orders (or sender) for moving the cursor over the screen and/or selecting a position of the cursor, and it is also a sensor (or receiver) which perceives "in blind mode" tactile information fed back by way of the actuator, hence without the user having to watch the screen and/or in addition to his visual perceptions.

It is thus known to provide the user with "passive" (or open loop) tactile sensations that are produced directly in response to the movement of the finger over the actuator, that is to say in its sender function.

The correlation between the tactile sensation perceived by the user and the quality of the movement of the cursor over the screen resulting from the action of the finger on the actuator, that is to say the actual result on the screen, is very imprecise. Moreover, confusion is created in the case of simultaneous movements along both axes since the "clicks" combine and lose their function of information relating to the movement along a given axis.

The passive tactile sensations or information cues do not for example make it possible to indicate to the user whether the cursor is getting closer to or further away from a target, or for example the distance remaining to be travelled in order to reach the target.

In the case of a movement or scanning, such passive tactile sensations or information cues are for example mechanical "clicks" or pulses corresponding to each signal or electrical pulse produced by the navigator destined for the electronic circuits for processing signals or data of the apparatus, or corresponding to series of pulses.

Other mechanical "clicks" or pulses, generally of different intensity and of a different nature to the previous ones, correspond to the electrical pulses provided to the electronic circuits during a manual enter or select action, for example when a target has been reached.

Nowadays it is necessary to provide the user with (closed loop) "active" tactile sensations or information cues, in particular when the navigator is used in conjunction with a game, in such a way that a "feedback of information" by feedback of load or of force is available, which is representative of the "quality" of the actual movement of the cursor on the screen.

These "qualitative" or active information cues or sensations are transmitted to the user's finger, that is to say in its receiver function, while making it possible to reduce the user's response times by thus "short-circuiting" his other senses such as sight and hearing.

Such is the case in particular aboard a motor vehicle in the cabin of which one seeks to reduce the overly large numbers of switches, or of other control interfaces or devices that are dispersed in contradiction with the safety standards which apply to the driver's station and to the driver.

These interfaces therefore have to be grouped together and concentrated within multifunction control devices and in particular by virtue of navigators.

Moreover, it must be possible for these multifunction interfaces to be actuated blind, in particular by providing the driver with active tactile sensations, doing so in such a way that the driver can concentrate all his attention on driving the vehicle with the greatest possible safety.

In order to provide the user with active tactile sensations, it has already been proposed that the actuator, such as the ball of a trackball, be acted on directly, or else, in documents US-A-4,868,549 and US-A-5,781,172, that a shaft tied in rotation to coding means, for example to an optoelectronic coding wheel, be braked or acted on by way of a controlled brake or motor by calling upon an angular position sensor ("encoder") situated on the shaft.

All the latter solutions are especially complex and bulky and in particular require the availability of a sensor of the angular position of the shaft.

The invention proposes an improvement to the control devices represented in the document WO-A-02/075641 and in French Patent Application No. 0211394 of 13 September 2002.

Such a control device is of the type comprising a generator of control signals, or pulses, for an electronic apparatus, in particular for the control of the movements of a cursor on a display screen of the apparatus, which comprises
a horizontal shaft which is mounted revolving in a housing of the device and which is able to be driven in rotation about its axis, directly or indirectly, by a manual actuation control member mounted rotatably in the housing, for example by a ball or by a drum; and a toothed control pinion which is tied in rotation to the shaft and between two consecutive teeth of which is received an upper span of a moving contact rod in the rest position, in such a way as to cause the tilting of the contact rod, in one or the other direction, when the shaft is driven in rotation so as to establish electrical contact between the contact rod and one or the other of two fixed contacts and thus generate a control signal, and to subsequently cause the automatic escape of the upper span from the space delimited by the two consecutive teeth beyond a determined angle of rotation of the associated control shaft.

In a device of this type, each action, by a sufficient angle, on the control ball causes in a one-to-one manner the direct and instantaneous formation of a control signal, the direction of rotation likewise being detected directly depending on whether the moving rod co-operates with one or the other of the two fixed contacts, this being in contradistinction to the other known devices which call upon circuits and software for analysing the signals provided by the coding devices which are tied in rotation with the shaft, as is the case for example with the optoelectronic coding wheel devices.

Thus, each overstepping of a tooth in one or the other direction causes the formation of a control pulse or signal which is also representative of the direction of rotation. In order to afford the user of such a device "active" tactile sensations, and in accordance with the teachings of the invention, such a device is characterized in that it comprises electromagnetic means which, when they are energized, apply an electromagnetic field to the signals generator pinion in such a way as to attract and/or to retain the pinion in a determined angular position, and in that the electrical energizing of the said electromagnetic means of attraction of the control pinion is triggered by the generation by the pinion of a control signal corresponding to a determined state of the controlled apparatus, so as to thus afford the user a tactile sensation corresponding to the arising of this state.

Thus, the invention makes direct use of the control pinion serving to generate the signals or the trains of signals or pulses, without calling upon numerous additional members, and in particular without any angular position sensor, and practically without modifying the control shaft and its control pinion, or calling upon a brake or a motor. Moreover, the designs proposed in respect of the electromagnetic means may be easily integrated into the housing of the existing device without increasing its bulk.

According to other characteristics of the invention:
- the said electromagnetic means of attraction comprise a solenoid arranged in the housing which is able to produce a magnetic field when it is energized, and the control pinion is made of iron or of a ferromagnetic material and is disposed in the magnetic field;
- field lines of the magnetic field are oriented in a direction orthogonal to the axis of rotation of the control pinion in such a way as to cross the latter;
- field lines of the magnetic field lie substantially in a diametral plane of the control pinion;
- the control pinion comprises an even number of teeth which are diametrically opposed pairwise;
- the control pinion comprises an odd number of teeth;
- the solenoid comprises a yoke which comprises at least one lower horizontal branch about which is wound the coil of the solenoid and which is extended by at least one upper horizontal branch whose free end edge lies axially facing the exterior envelope of the teeth of the control pinion;
- the lower horizontal branch of the yoke is extended by two opposite upper horizontal branches whose opposite free end edges delimit a gap in which the control pinion is accommodated;
- the horizontal upper branch lies in the plane of the axis of rotation of the control pinion;
- the axial width of the horizontal upper branch is substantially equal to the axial length of the teeth of the control pinion;
- the yoke is made of a ferromagnetic material;
- the control shaft carries an additional magnetic attraction pinion similar to the control pinion and tied in rotation to the control shaft;
- the control pinion is a transversely polarized magnet;
- the longitudinal control shaft is a longitudinally polarized magnet;
- the device comprises luminous means able to provide a visual indication to the user, the energizing of which is controlled in association with the electrical energizing of the said electromagnetic means;
- the moving contact rod is tied in rotation to the last turn of an axial end of a torsional spiral spring, made of metal wire, of horizontal axis, the cylindrical body of which is accommodated in the housing, the other end of which is blocked in rotation, and in that the said cylindrical body constitutes the said coil of the solenoid;
- the device comprises two orthogonal revolving control shafts driven in rotation, each in both directions, by a control ball mounted rotatably in the housing, each shaft being tied in rotation to a control pinion belonging to a control signals generator, and the control pinion of each control shaft is associated with controlled electromagnetic means of attraction in rotation of the control pinion.

Other characteristics and advantages of the invention will become apparent on reading the detailed description which follows for the understanding of which reference may be made to the appended drawings in which:
- Figure 1 is an exploded perspective view of the various components of a control device of the "trackball" type according to the prior art such as is represented in French Patent Application No. 0211394 of 13 September 2002;
- Figure 2 is a sectional view of the device according to Figure 1 through a vertical sectional plane and in which the moving contact rods are represented in one of their two opposite positions of contact with one or the other of the two fixed contacts;

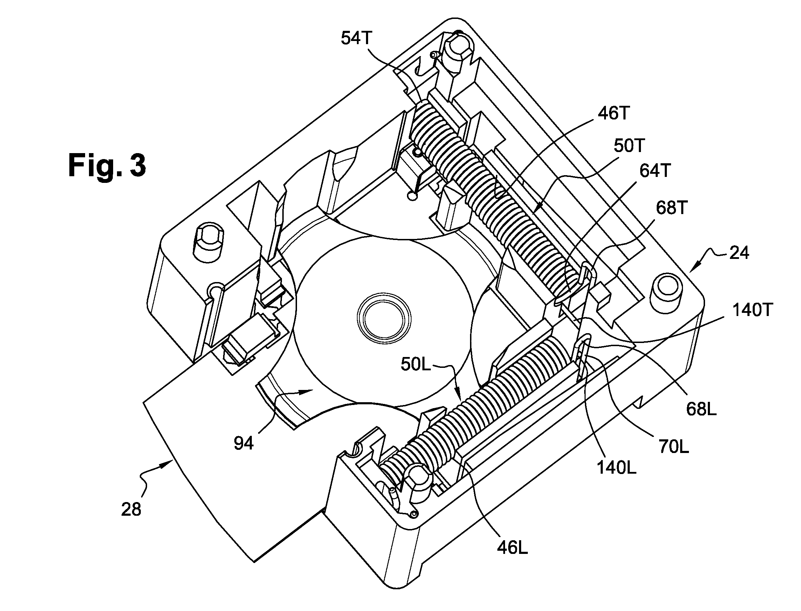

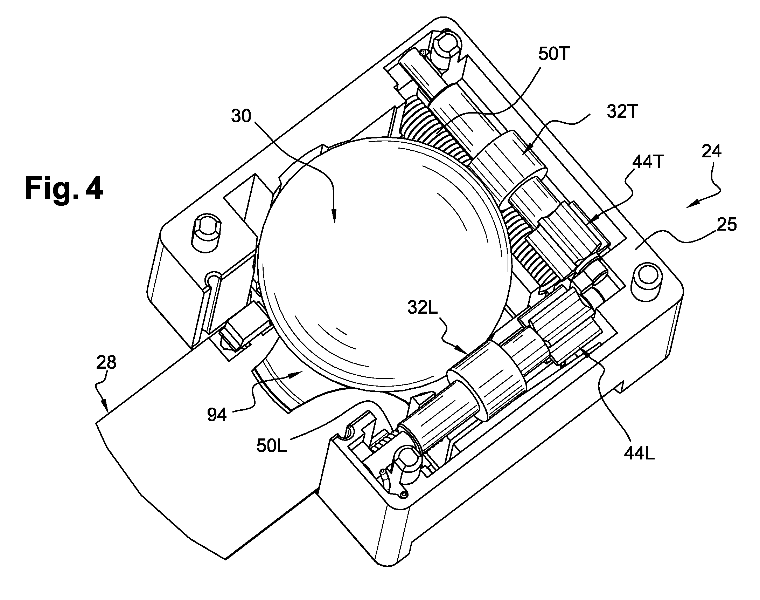

- Figures 3 and 4 are perspective views of the trackball of Figures 1 and 2 which illustrate steps for placing the components in the lower part of the housing;

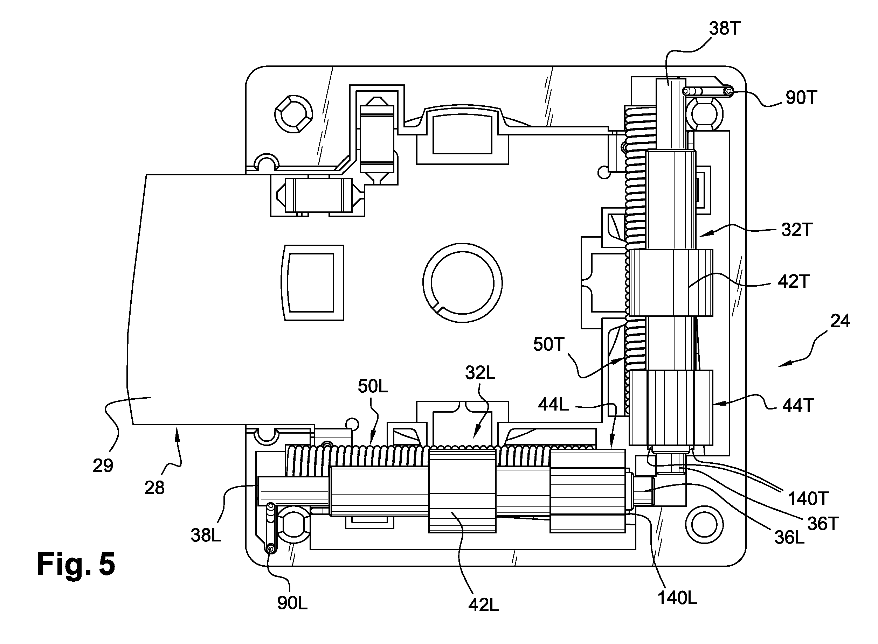

- Figure 5 is a view from above of Figure 4 which represents the trackball, without its control ball;
- Figure 6 is a view similar to that of Figure 2, in section on the plane 6-6 of Figure 9, which illustrates a first embodiment of a trackball type device according to the invention in which the electromagnetic means act on the control pinion of a control shaft that is unmodified with respect to the state of the art;
- Figure 7 is a view similar to the previous one, in which the moving contact rods are represented in their stable vertical rest position;
- Figure 8 is a view similar to the previous one, in which the moving contact rods are represented in their opposite contact position from that of Figure 6;
- Figure 9 is a view from above, similar to that of Figure 5 which illustrates the trackball of Figures 6 to 8, with its control ball;
- Figure 10 is a perspective view on a large scale of one of the control shafts of the trackball according to the first embodiment;
- Figure 11 is a perspective view of the yoke of the solenoid associated with the pinion of the control shaft of Figure 10;
- Figure 12 is a view which represents the yoke and the control shaft in their functional relative position, with a pair of opposite teeth of the control pinion that are aligned with the poles of the cage and with the coil of the solenoid wound around a transverse axis with respect to the longitudinal axis of the control shaft;
- Figure 13 is a view similar to the previous one, in which is represented an electrical current running through the coil and the electromagnetic flux produced with the various electromagnetic field lines;
- Figure 14 is an axial end-on view of Figure 13;
- Figures 15 and 16 are views similar to those of Figures 13 and 14, but with the control pinion angularly offset by half a tooth pitch with respect to its previous position;
- Figures 17 to 20 are views similar to those of Figures 9, 12, 13 and 14 which illustrate a second embodiment of a trackball according to the invention in which the control shaft comprises an additional electromagnetic attraction pinion;
- Figures 21 to 27 are views similar to those of Figures 7, 9 and 12 to 16 which illustrate a third embodiment of a trackball according to the invention in which the coil of the solenoid is wound around a longitudinal axis with the electromagnetic flux crossing the control shaft longitudinally;
- Figures 28, 29 and 30 are views similar to those of Figures 22, 23 and 24 which illustrate a first variant of the third embodiment, according to which the control shaft comprises an additional electromagnetic attraction pinion;
- Figures 31, 32, 33 and 34 are views similar to those of Figures 17, 23, 24 and 25 which illustrate a second variant of the third embodiment, according to which the control shaft comprises an additional electromagnetic attraction pinion with two solenoids with longitudinal cages and coils;
- Figures 35 to 40 are views similar to those of Figures 6, 9, 12, 13, 14 and 16 which illustrate a third variant of the third embodiment, according to which the control shaft comprises an additional electromagnetic attraction pinion with a single solenoid with longitudinal cage and coil;
- Figures 41 to 44 are views similar to those of Figures 10, 13, 15 and 19 which illustrate a first subgroup of designs belonging to a fourth embodiment according to which the teeth of the control pinion are permanently magnetized transversely and alternately north and south;
- Figures 45 to 51 are views similar to those of Figures 10, 24, 26, 29, 30, 33 and 38 which illustrate a second subgroup of designs belonging to a fifth embodiment according to which the control shaft is permanently magnetized longitudinally with its opposite ends, south control pinion side and north respectively;

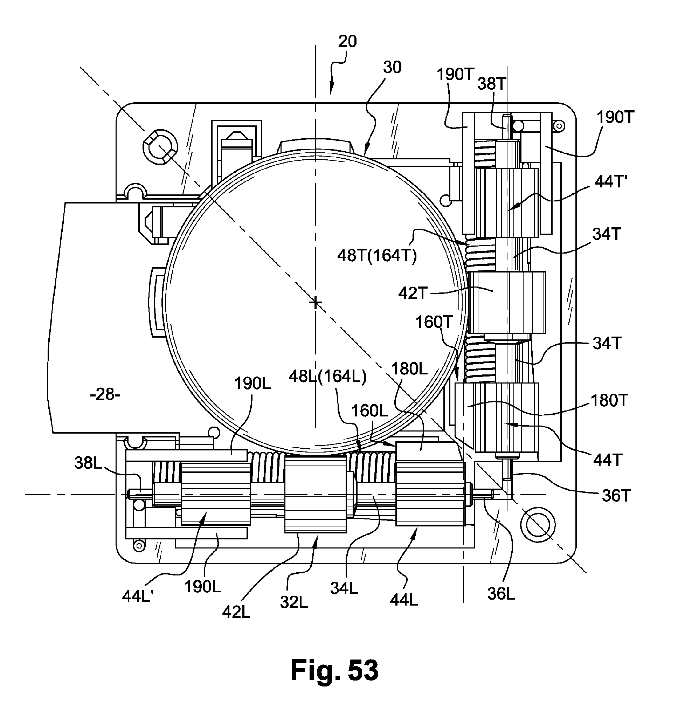

- Figures 52 to 55 are views similar to those of Figures 6, 9, 11 and 13 which illustrate a sixth embodiment in which the spring of the moving contact functions as coil or winding of the solenoid;
- Figure 56 is an axial end-on view on a larger scale of the solenoid and of the control shaft in the position of Figure 52 at a moment at which the moving contact rod is in contact with the fixed contact and in which the teeth of the control pinion are not yet aligned with the polar branches of the yoke;
- Figure 57 is a view similar to the previous one, in which the solenoid spring is energized;
- Figure 58 is a view similar to that of Figure 55 which illustrates a variant of the sixth embodiment, in which the control shaft is permanently magnetized longitudinally with its opposite ends, south control pinion side and north respectively.

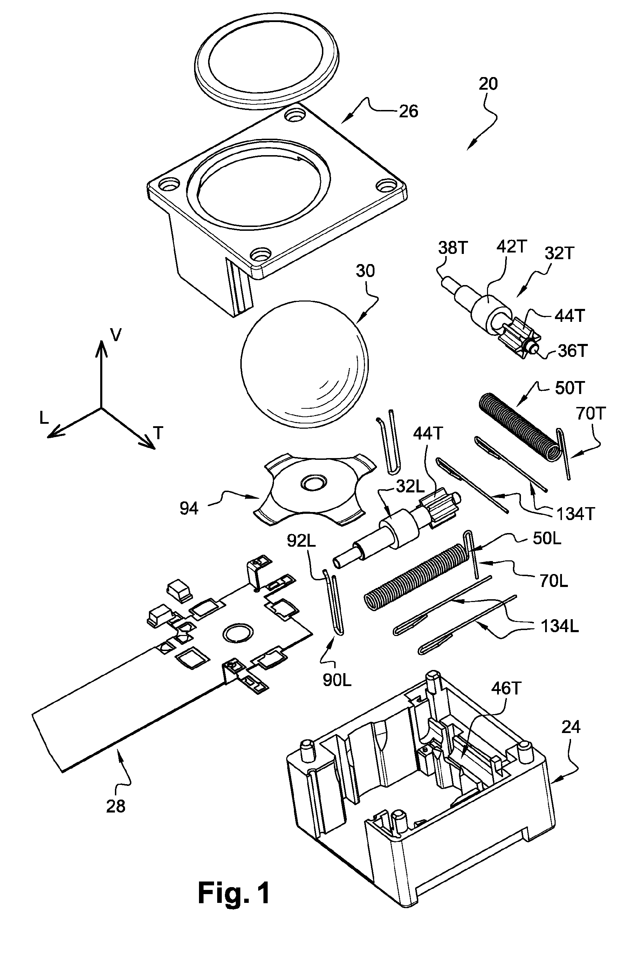

For the description of the invention, we shall in a nonlimiting manner adopt the vertical, longitudinal and transverse orientations according to the V, L, T reference frame indicated in Figure 1.

By convention, we shall also adopt the terms lower, upper, front, rear and left, right with reference to Figure 1.

In the description which follows, identical, similar or analogous elements belonging to the embodiments according to the invention or according to the state of the art will be designated by the same numerical or alphanumerical references.

The first part of the description will describe chiefly the elements common to the embodiments of the invention and to the state of the art illustrated in document WO-A-02/075641 and French Patent Application No. 0211394 of 13 September 2002 (both in the name of the applicant), the detailed content of which documents may be referred to for further details.

The device 20 comprises a housing 22 of substantially right-angled parallelepipedal general shape made of two parts, the main lower part 24 and the upper part 26 forming a cover for closing the lower part which accommodates the main components of the device 20.

The device essentially comprises a central control ball or sphere 30 which drives in rotation, here by friction, two orthogonal control shafts, each of which is associated with a signal generator.

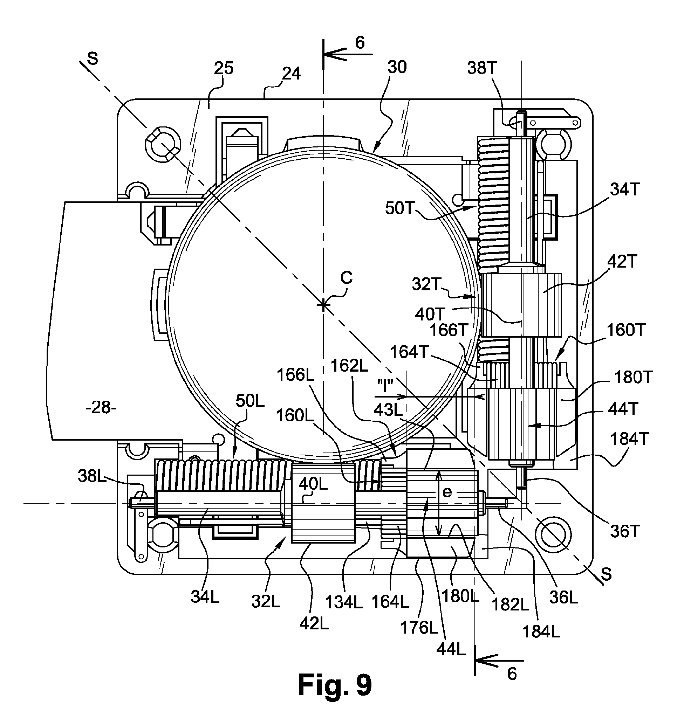

The two shafts and the signal generators are of overall symmetric design, and arranged symmetrically, with respect to a vertical plane of symmetry corresponding to the line S-S of Figure 9 and in which the centre C of the ball 30 lies.

Thus the identical, similar or analogous elements associated with the control shaft of longitudinal axis and with the control shaft of transverse axis will be designated by the same reference numerals indexed "L" and "T" respectively.

Each shaft 32L, 32T thus comprises a stepped cylindrical body 34L, 34T whose two opposite free ends are mounted so as to rotate in both directions in the housing 22 about an axis 40L, 40T of rotation.

Each body 34L, 34T comprises a drive drum or roller 42L, 42T whose peripheral surface co-operates by friction with that of the ball 30, and a toothed control pinion 44L, 44T, which are arranged axially along the body 34L, 34T to which they are tied in rotation.

For the rotatable mounting of each shaft 32L, 32T the lower part 24 of the housing 22 comprises, in proximity to its horizontal upper face 25, vertically upwards open recesses which respectively receive the free ends 36L, 36T and 38L, 38T of the body 34L, 34T of each shaft 32L, 32T.

Beneath each control shaft 32L, 32T, the lower part 24 of the housing 22 comprises a recess of semicylindrical general duct shape 46L, 46T open towards the top, each of which receives the cylindrical main body 48L, 48T of a torsional spiral spring 50L, 50T made of metal wire wound around an axis 52L, 52T.

The first turn 64L, 64T of the spring 50L, 50T is extended upwards by a vertical strand 62L, 66T which joins the first turn to a moving vertical contact rod 70L, 70T by way of an upper strand 68L, 68T bent at 180°.

The vertical orientation of the contact rod 70L, 70T, in the rest position, results from the design of each spring 50L, 50T with its contact rod 70L, 70T and its bent strand 58L, 58T.

As a function of the rotation of the ball 30, each control rod 70L, 70T is able to tilt with respect to its vertical position with a corresponding displacement of the lower contact span 78L, 78T which is received between two parallel and opposite horizontal fixed contact rods 134L, 134T.

Each fixed contact rod 134L, 134T is built-in in the manner of a beam, with the exception of its free end contact span 140L, 140T which lies freely, each one on either side of the vertical moving contact rod 70L, 70T which is free to deform elastically laterally in a horizontal plane.

The device 20 also comprises an entry switch which consists in essence of an elastic triggering member of the monostable type 94.

The electrical linking of the control device 20 is ensured by means of a flat cord or cable 28, also known as a "flex", whose design and technology are known.

The manner of operation of the signal generators will now be described with reference to the shaft 32L.

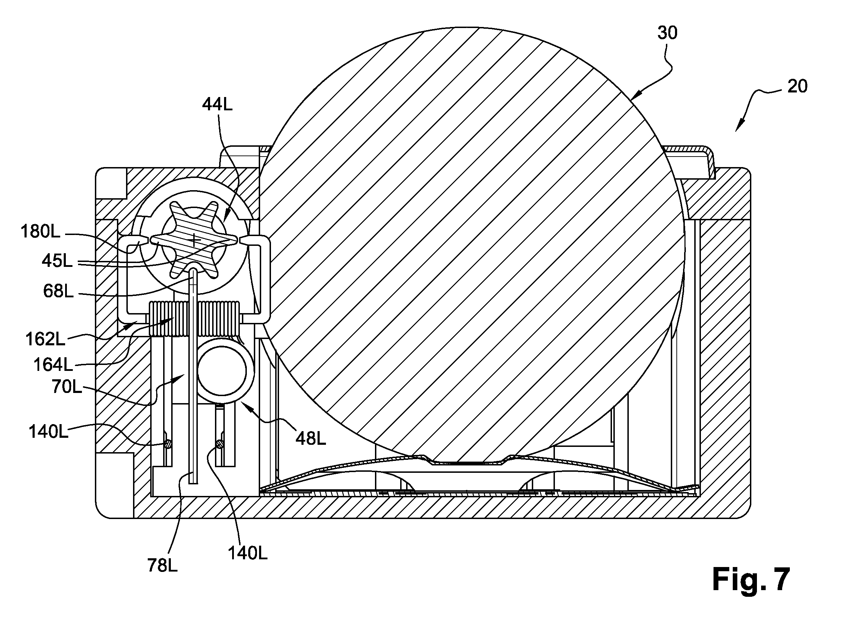

In the rest position represented in Figures 7, 21 and 35, the moving contact rod 70L is vertical and its bent upper span 68L is received, with lateral play along the direction T, between the teeth of the pinion.

By causing a rotation of the ball 30 about its centre C, and here about a horizontal axis of longitudinal orientation, a rotation of the shaft 32L is caused about its axis of rotation 40L.

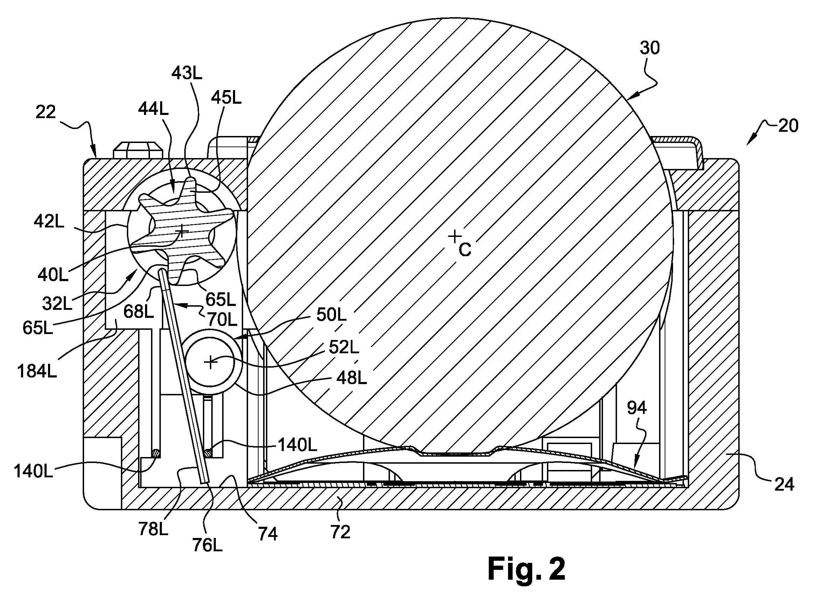

This rotation causes the contacting of the flank 65L of the right-hand tooth 45L which will then push the upper span 68L transversely, from right to left (see Figure 2).

By virtue of the possibility of torsional elastic deformation of the body 48L of the spring 50L to which the rod 70L is tied and which functions as restoring spring for returning the rod 70L to its rest position, the latter tilts overall about the axis 52L until its lower contact span 78L comes into electrical contact against the corresponding fixed contact 140L.

The clockwise rotation of the roller 32L continues and this rotation causes, in the manner of a mechanism of the "Maltese Cross" type, the automatic escapement of the upper span 68L which continues its tilting movement so as subsequently to automatically return, together with the contact rod 70L, to its stable vertical rest position.

If the rotational movement of the ball 30 is continued in the same direction, the rod 70L goes again to cause the generation of a new signal by virtue of the electrical contact which is again established.

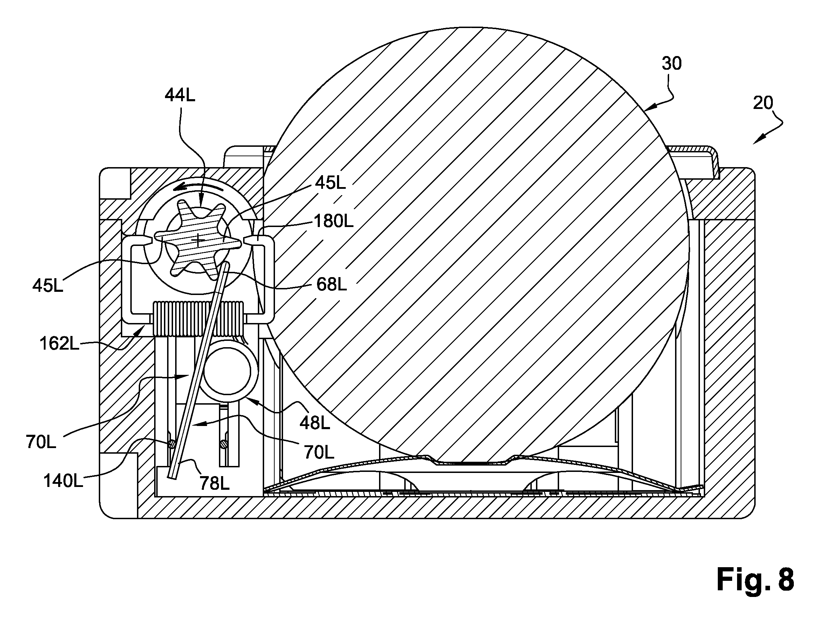

Conversely, if the ball 30 is driven in rotation in the other direction and the tooth 45L causes the tilting of the contact rod 70L until its lower contact span 78 comes into contact against the other fixed contact 140L (see Figure 8).

The differentiation of the two types of signals established makes it possible to distinguish the direction of rotation of the relevant control shaft, and hence the direction of rotation of the ball, doing so by means of a single moving contact, 70L or 70T, for each signal generator and for each signal formed.

The ball practically always revolves about a horizontal axis and, as a function of the orientation of the plane of rotation of the ball, the numbers of signals or of pulses generated by the two generators are respectively proportional to the components, in X and in Y, of scanning of the cursor on the screen.

Entry is effected by applying to the control ball 30 a vertical load F oriented globally in the direction parallel to the direction V.

In accordance with the teachings of the invention, each shaft 32L, 32T is associated with electromagnetic means 160L, 160T of attraction in rotation of its control pinion 44L, 44T.

These means will be described in detail with reference to the control pinion 44L of the control shaft 32L.

For this purpose, according to the first embodiment, the control pinion 44L is made of a ferromagnetic material, in particular of iron, and it is associated with a solenoid 160L consisting of a yoke or cage 162L and a coil or winding 164L.

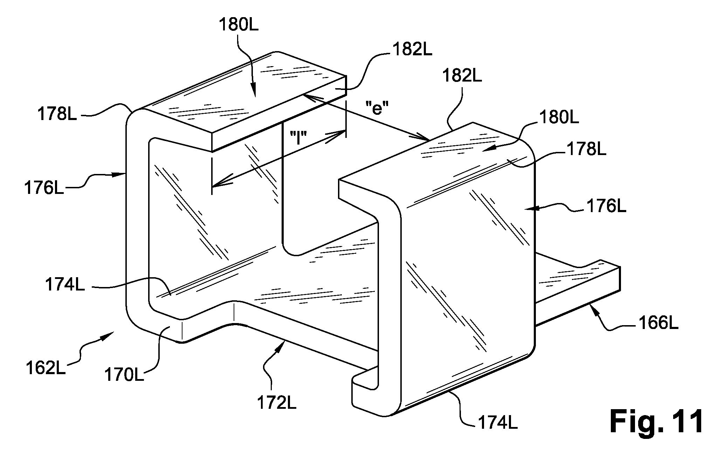

As may be seen in Figure 11, the yoke 162L, which is preferably made of a ferromagnetic material, comprises a lower horizontal branch 166L of longitudinal orientation, about which is wound the coil 164L with its transversely adjacent turns 168L each of which lies in a vertical plane.

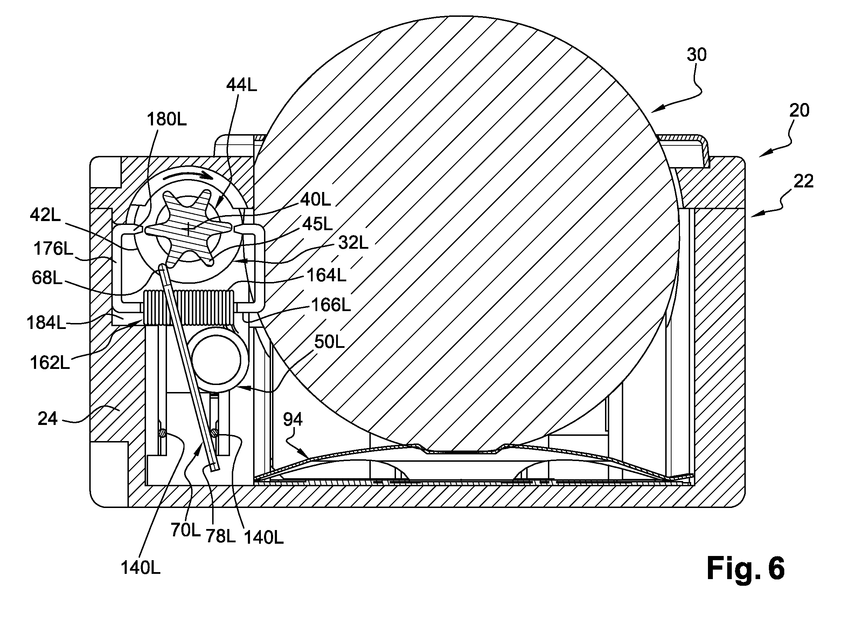

In its rear longitudinal end transverse edge 170L the lower branch comprises a notch 172L to allow passage of the vertical moving contact rod 70L with its upper strand 68L bent at 180° (see Figures 6 to 8).

Each longitudinal edge 174L of the lower branch 166L is extended upwards by a vertical branch of longitudinal orientation 176L whose width "ℓ" is preferably at least equal to the axial length of the teeth 45L of the pinion 44L, all of whose teeth are here of the same axial length.

At its upper end longitudinal edge 178L, each vertical branch 176L is extended horizontally towards "the interior" in the direction of the teeth 45L of the pinion 44L, by an upper horizontal branch 180L, each end edge of which constitutes a pole of the yoke 162L.

Each upper polar branch 180L is delimited transversely by an interior longitudinal edge 182L, these two opposite facing polar edges 182L delimiting between them a "gap" whose transverse width "e" is substantially equal to the external diameter of the control pinion 44L, in such a way that the longitudinal extreme edges 43L of two diametrically opposite teeth 45L are received between the edges 182L, with slight transverse play as may be seen in Figures 6 to 9, 13 and 14, so that the control pinion is free in rotation between the polar branches 180L when the solenoid 160L is not energized.

The two upper polar branches 180L lie here, by way of nonlimiting example, in one and the same horizontal plane containing the axis 40L of the control pinion 44L, and therefore in a horizontal diametral plane of the control pinion.

As may be seen in Figures 6 to 9, the solenoid 60L is mounted in the housing 22, underneath the control pinion 44L, in recesses 184L, 184T provided for this purpose in the lower part 24 of the housing, in such a way that the yoke 162L together with its upper polar branches 180L occupy the functional vertical and longitudinal position corresponding to the positioning of the pinion 44L in the gap delimited by the poles 182L.

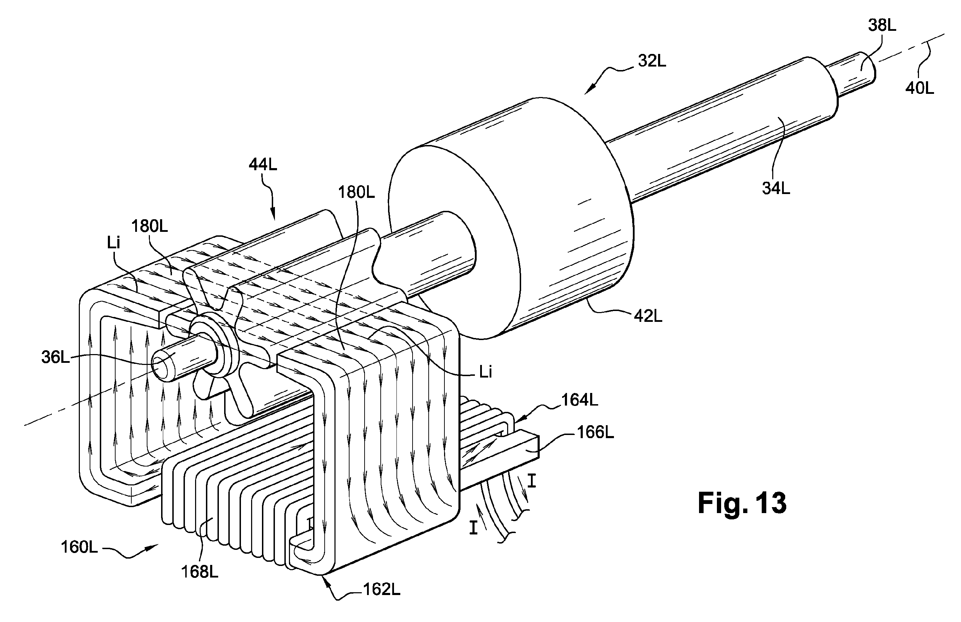

As may be seen in Figures 13 to 16, when the coil 164L is energized with an electrical current "I" flowing in a determined direction, the solenoid 160L produces an electromagnetic field whose field lines "Li", or flux lines, are indicated in these figures.

The field lines cross in particular the gap, transversely between the polar upper branches 180L, and hence the ferromagnetic toothed pinion 44L.

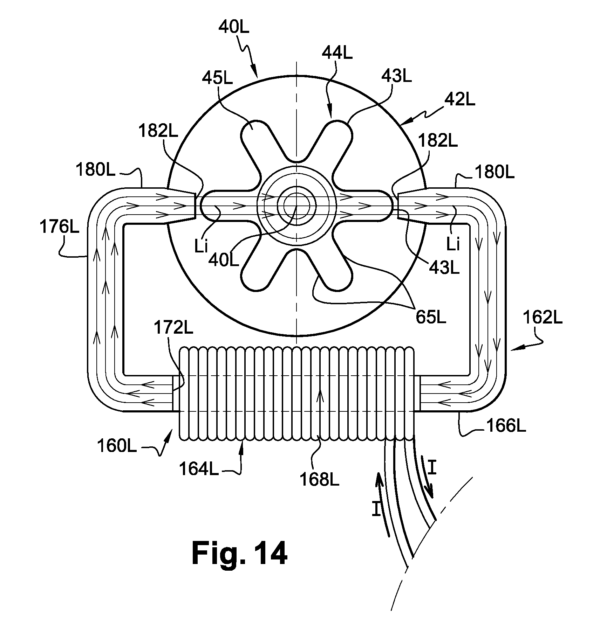

As may be seen in Figures 13 and 14, when two diametrically opposite teeth 45L are aligned in the horizontal plane of the two polar upper branches 180L, the electromagnetic flux, exiting via a first pole 182L, crosses these two teeth of the pinion in succession, then re-enters via the other pole 182L and thus determines a stable angular position of the control pinion 44L, in which position it is attracted in rotation by the electromagnetic field.

The other teeth 45L of the control pinion 44L, here two above and two underneath, are globally outside the electromagnetic field.

When the polar upper branches 180L are coplanar and horizontal, this "frees" the two teeth of the underneath for the actuation, known, of the moving contact 68L, 70L.

However, without departing from the framework of the invention, the arrangement of the two polar upper branches 180L may be different, in particular as a function of the number of teeth, and it is for example possible to envisage the two polar upper branches 180L being arranged in two radial planes corresponding to the radial planes in which two consecutive teeth of the control pinion lie.

Likewise the thickness, in the vertical direction, of each polar upper branch 180L is substantially equal to the thickness of a tooth 45L so that the electromagnetic flux enters and leaves through a single tooth.

However, without departing from the scope of the invention, each polar upper branch 180L can be shaped like a fork, for example with two branches, in such a way that the flux enters and leaves through a group of several consecutive teeth.

When the solenoid 160L is energized with electric current, the electromagnetic action produces a force of electromagnetic attraction of the control pinion which tends to oppose its angular displacement, in one or the other direction, from the position of electromagnetic equilibrium illustrated in Figure 14.

As may be seen in Figures 6 or 8, the electrical control pulse or signal is formed before the next rest position of horizontal alignment of two diametrically opposed teeth is reached.

If one wishes, as a function of the position of the cursor on the screen, it is therefore possible to trigger the electrical energizing of the solenoid right from the formation of the signal, that is to say for example using the rising edge of the signal formed.

If the rotation continues, the electromagnetic field attracts the pinion into the next equilibrium position. Likewise, if the manual action on the ball is released, the rotation of the ball continues, or reverses, until an equilibrium position is reached.

The effect of the force of attraction or "calling" force therefore affords the user a tactile sensation that makes it possible to guide "in blind mode" his hand or his finger which acts on the ball 30.

If the user wants to go "too far" by continuing to drive the shaft in the same direction, he then experiences a "blocking" tactile sensation which opposes his manual action.

This sensation results from the energizing of the solenoid 160L which is controlled by the electronic circuits and the analysis and processing programmes of the electronic apparatus (not represented) equipped with the trackball, for example when the cursor (not represented) whose displacements are controlled by the ball 30 of the trackball reaches its target on the screen (not represented).

Since the teeth 45L in which the electromagnetic forces are induced are also those which serve for the generation of the control pulse trains, it is not necessary to employ an angular position sensor on the shaft of the control pinion 44L to establish a correlation between the establishment of the electromagnetic force, through energization of the solenoid 160L, and the electrical pulse corresponding to the cursor's position entered by the programme, so that the reaction force of the ball 30 (or of the actuator) of the switch on the user's finger occurs exactly when the cursor reaches its target on the screen. Neither is a brake or a motor of the shaft now called upon.

When the target is reached on the screen, the user is alerted "blind" by the reaction force on his finger, and he then stops driving the ball 30 in rotation and he releases the latter in the equilibrium position to which it is "attracted" by the electromagnetic force, by way of the roller 42L.

A time constant, or quite simply the falling edge of the last electrical pulse, can then be used to interrupt the electrical energizing of the solenoid 160L, so as to minimize the electrical energy consumption of the device, and to again allow the displacement of the ball or of the cursor of the navigator, in the direction or directions permitted by the programme.

Next, as a function of the program of the electronic apparatus, the user will be able to resume the rotation of the ball 30 so as to reach a new target:
a) In one or the other direction, if the previous target was situated in an intermediate position between two extreme positions.
b) Solely in the reverse direction to the previous one, if the previous target was situated in an extreme position, for example at the end of a drop-down menu displayed on the screen.

Specifically, in the first case a), the solenoid 160L will not be energized again until the approach to the next intended target, thus leaving the choice of a new target, upstream or downstream of the previous one.

In the second case b), either the solenoid will be energized again immediately if the user's finger restarts the rotation of the ball 30 in the direction which would lead to the cursor being moved beyond the extreme position of the previous target, or it will not be energized again to allow the user's finger to restart the ball, in the reverse direction of rotation to the previous one, so as to come back as far as the next target.

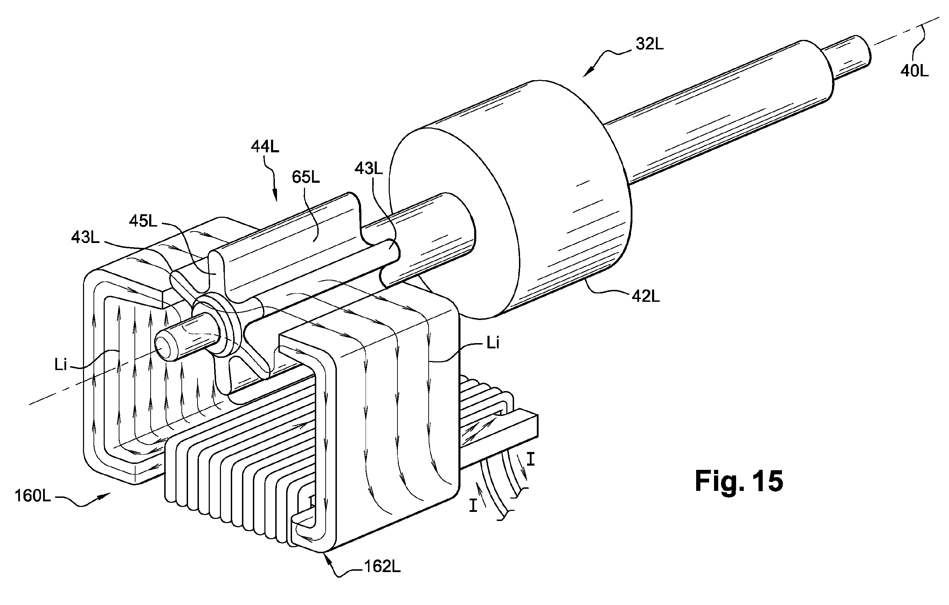

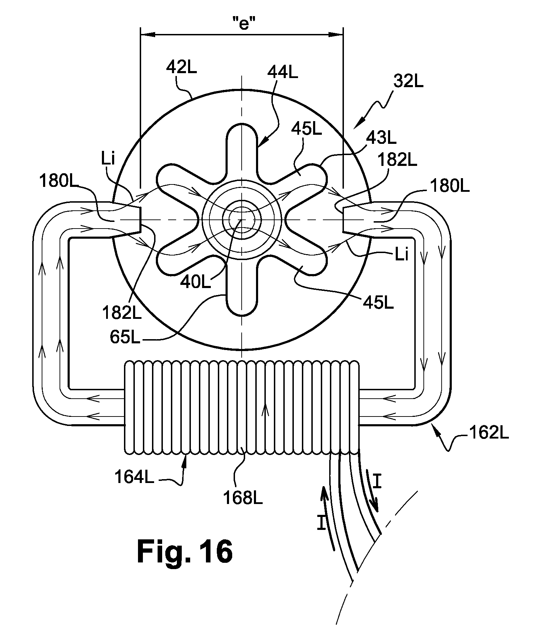

When the control pinion 44L is in its position illustrated in Figures 15 and 16, which is angularly offset by half a pitch between two consecutive teeth, it is then in an unstable electromagnetic state, the system tending to return to the stable state represented previously in one direction of rotation or in the other.

As may be seen also in Figures 6 and 8, in the position of establishment of contact with one or the other of the two opposite fixed contacts for signals 140L, the electromagnetic forces tend, if the solenoid 160L is energized, to urge the control pinion 44L in rotation towards its stable position, illustrated in Figure 7, between the moment at which electrical contact 78L-140L is established or "closed" and the moment at which it will again be open, after the end of the snap-fitting of the contact 68L onto the tooth 45L.

The design according to the invention incurs no mechanical wear of components and the much reduced bulk of each solenoid enables it to be placed in the lower part of the housing without modifying the latter with respect to its base design illustrated in French Patent Application No. 0211394 of 13 September 2002.

Hence, no increase in the total bulk of the navigator or trackball results therefrom.

The electrical linking, not represented, of each coil may be carried out very easily, in the interior of the housing, for example on the flex 28.

In the first embodiment just described, as in all the others which will be described subsequently, the control pinion 44L, 44T is completely unmodified in its design and its geometry with respect to the state of the art, and the trackball thus preserves all its characteristics and performance as regards the generation of the pulses or signals.

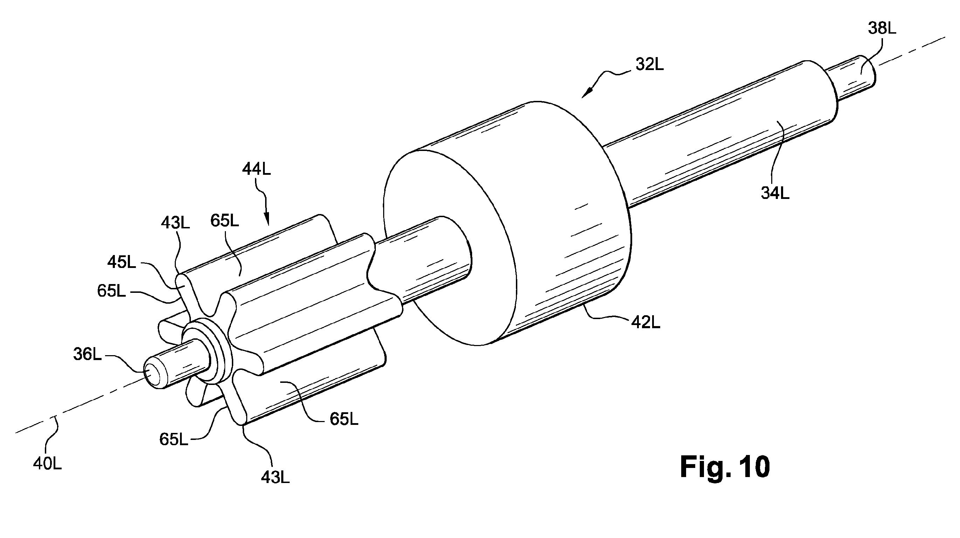

In the examples illustrated in Figures 6 to 16, each control pinion 44L, 44T, and hence each shaft 32L, 32T, is equipped with means of electromagnetic attraction according to the invention. It is however possible to equip just one of the two shafts without departing from the scope of the invention.

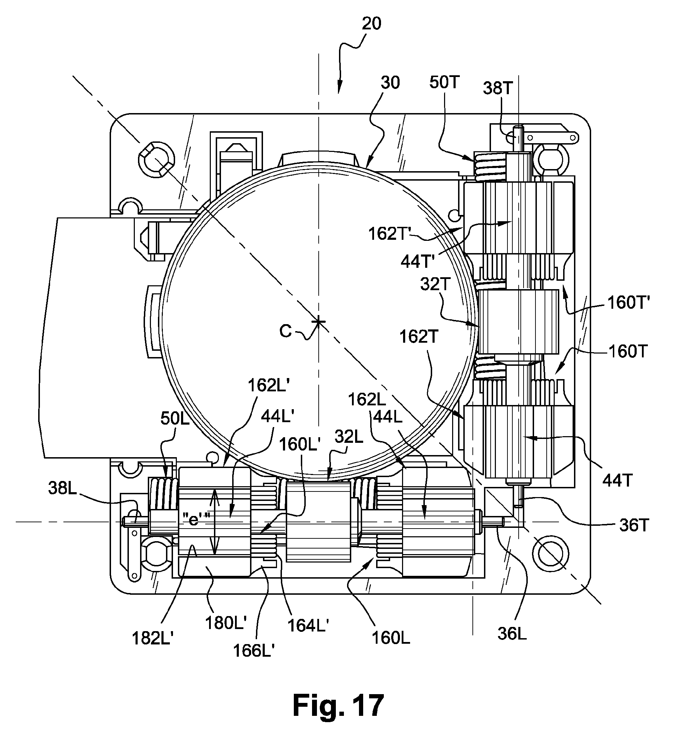

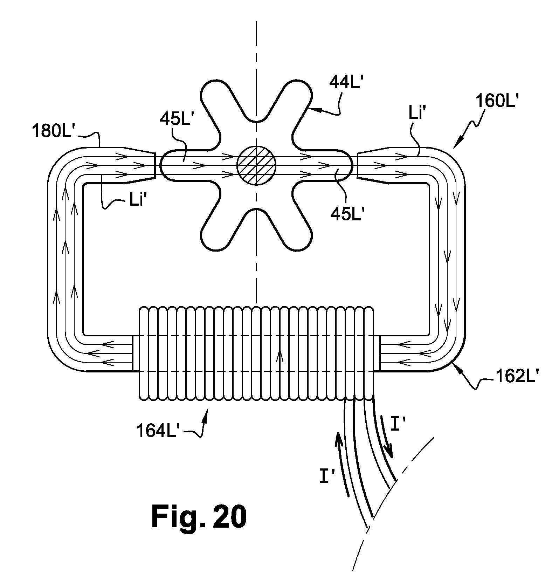

In the second embodiment illustrated in Figures 17 to 20 the control shaft comprises an additional pinion 44L' of electromagnetic attraction of the shaft 32L which is here identical to the control pinion 44L and which is likewise tied in rotation to the body 34L of the shaft 32L.

The additional attraction pinion 44L' is associated with a solenoid 160L' which is in all aspects identical to the solenoid 160L, the components being identical.

The electrical energizing of the coil 164L' is such that the electromagnetic fields, together with their field lines "Li" and "Li"', are in the same direction, that is to say that the electromagnetic attraction torques or effects add together.

By way of variant, the additional electromagnetic attraction pinion 44L' could consist of an extension of the control pinion 44L.

By thus "doubling" the electromagnetic system (44L, 160L) - (44L', 160L'), it is possible to obtain higher and/or more varied electromagnetic attraction forces if currents "I and I"' of different strengths are passed through the two coils 164L and 164L' which are mutually distinct, or indeed currents that are out of phase.

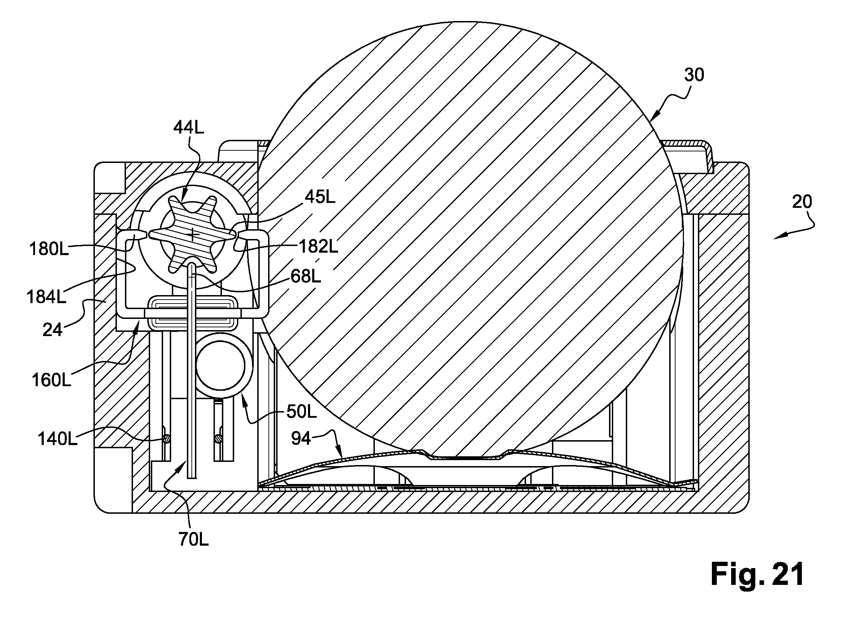

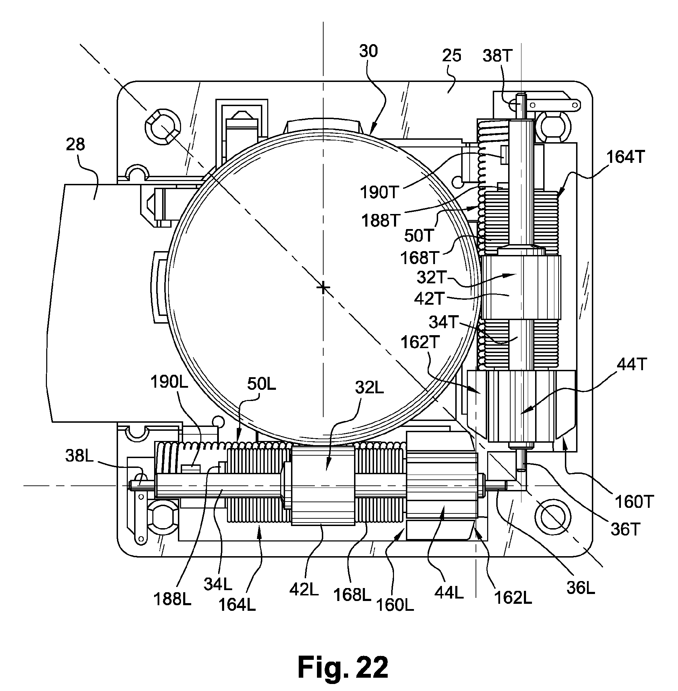

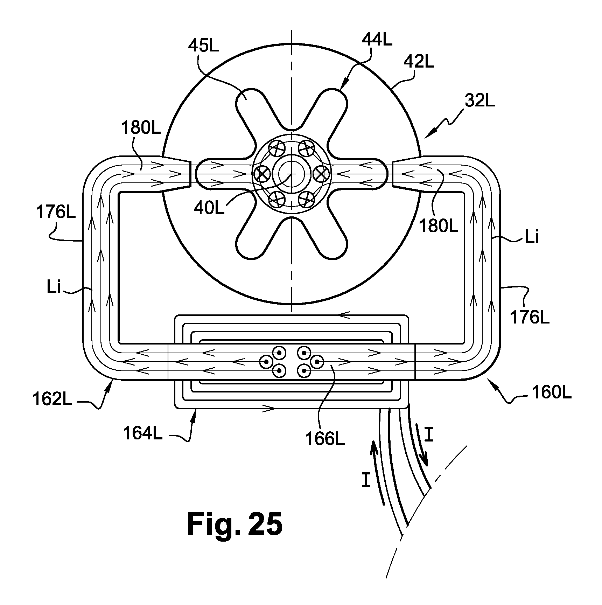

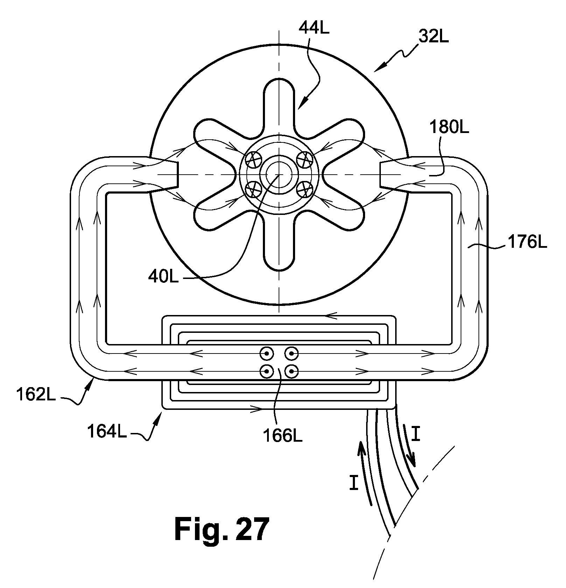

In the third embodiment illustrated in Figures 21 to 27, the trackball according to the invention comprises a coil 164L of the solenoid which is wound around a longitudinal axis with the electromagnetic flux crossing the control shaft longitudinally.

For this purpose, the lower branch 166L of the yoke 162L is extended longitudinally frontwards underneath the shaft 32L, substantially as far as its rear longitudinal end 38L.

Beyond its front span from which the vertical branches 176L stretch, it is around the lower horizontal branch 166L of longitudinal orientation that the coil 164L together with its longitudinally adjacent turns 168L is wound, each of which lies in a vertical and transverse plane.

From its front longitudinal end transverse edge 186L, the lower branch 166L is extended upwards by a transverse vertical branch 188L which is itself extended by a vertical and longitudinal upper arm 190L which constitutes an output pole for the electromagnetic flux.

By way of variant (not represented) it would be possible to make provision for a pair of diametrically opposite arms 190L constituting a stirrup surrounding the body 34L of the shaft 32L.

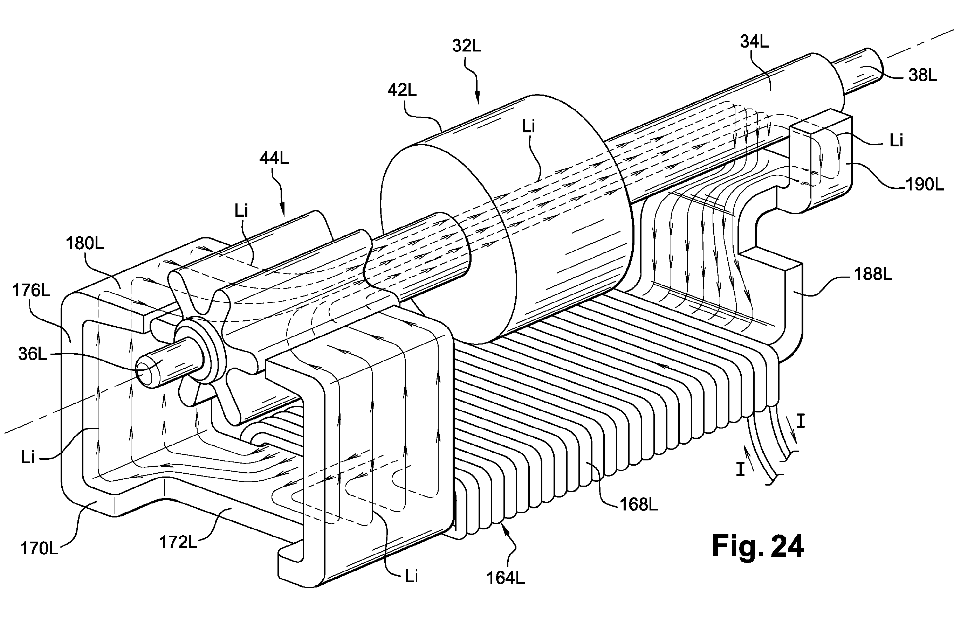

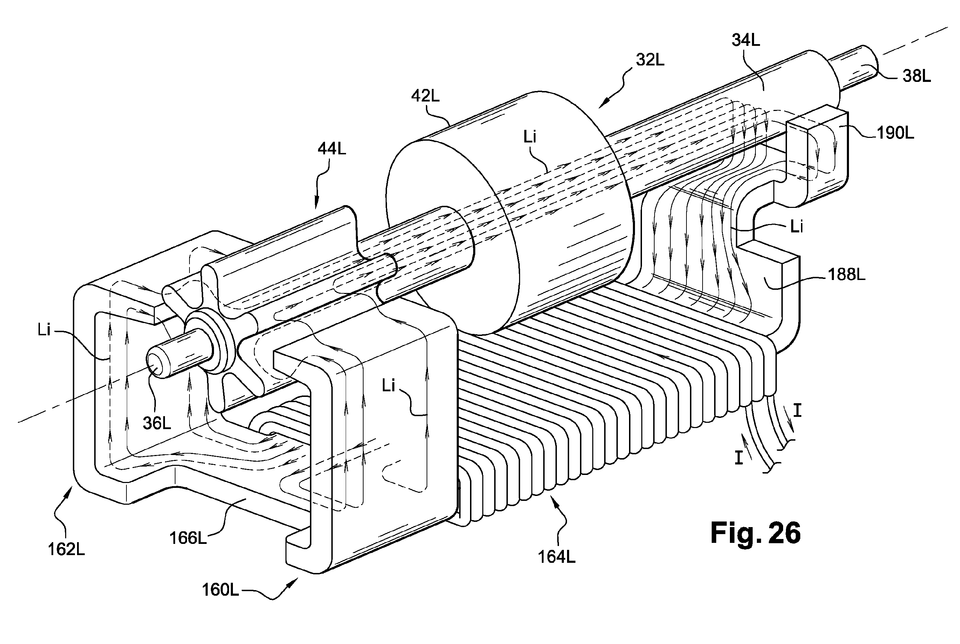

As may be seen in particular in Figures 24 and 26, the field lines "Li" symmetrically cross the diametrically opposite teeth of the control pinion 44L that are received between the polar upper branches 180L, as previously, then they cross the body of the control shaft longitudinally, then leave again through the bottom 190L.

The longitudinal coil 164L can comprise a large number of turns 168L, and it thus makes it possible to employ more ampere-turns, thus making it possible to considerably augment the electromagnetic attraction force or reaction force applied to the control pinion 44L.

It is also possible to increase the diameter of the body 34L of the control shaft so as to have a cross section for passage at least equal to the sum of the surface areas of the two poles 182L of like polarity of the yoke 162L which are crossed by the "incoming" electromagnetic flux so as to avoid electromagnetic losses or leaks.

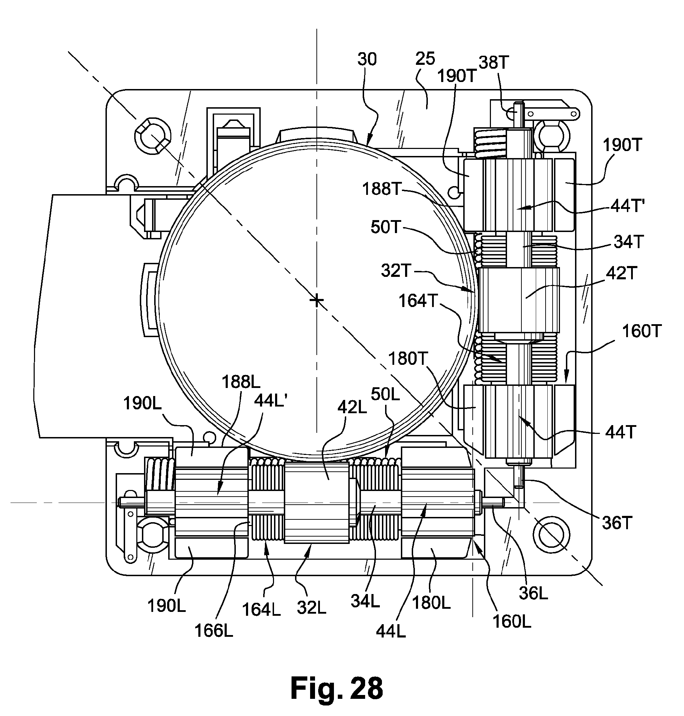

Figures 28, 29 and 30 illustrate a first variant of the third embodiment, according to which the shaft 32L comprises an additional pinion 44L' of the shaft.

This solution thus allies the advantages of the third embodiment with a longitudinal coil of large length with a large number of turns, and an "exit" stirrup for the electromagnetic flux having two horizontal upper arms 190L, similar to the polar upper branches 180L, 182L of electromagnetic attraction of the pinion 44L, between which arms is received the additional pinion 44L' carried by the body 34L of the shaft 32L.

As previously, the yoke 162L is monoblock and it can easily be placed in the housing.

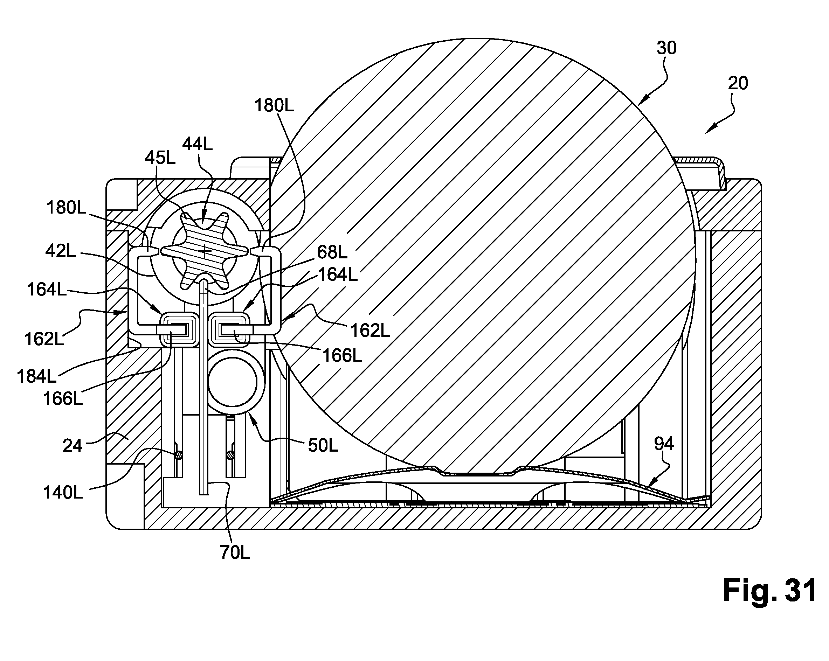

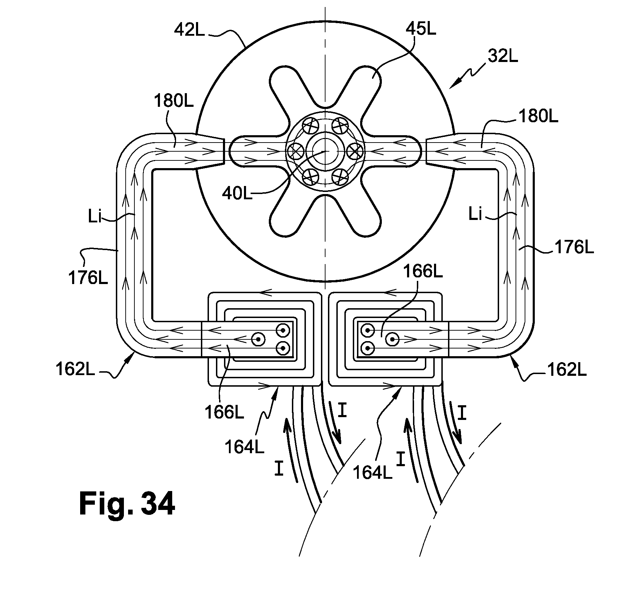

Figures 31 to 34 illustrate a second variant of the third embodiment, according to which the control shaft comprises an additional pinion 44L' of electromagnetic attraction of the shaft 32L and which comprises two solenoids with longitudinal cages and coils.

The two "parallel" solenoids, which are opposite with respect to a median vertical plane passing through the axis of rotation 40L of the shaft 32L, are designated by the same reference numerals and by analogy with the previous embodiments.

Structurally, each yoke 162L comprises a lower branch 166L with longitudinal coil 164L, a rear polar upper branch 180L whose longitudinal polar edge 182L is adjacent to the longitudinal edge 43L of a tooth 45L of the control pinion 44L, and a front polar upper branch 180L whose polar longitudinal edge 182L is adjacent to the longitudinal edge 43L' of a tooth 45L' of the additional electromagnetic attraction pinion 44L' carried by the shaft, in the vicinity of its rear longitudinal end 38L.

This design with two longitudinal coils 164L makes it possible to double the number of ampere-turns and/or to vary the reaction forces by energizing the two solenoids 162L with different currents.

It will be noted that it is possible to use two identical yokes, thus reducing the costs.

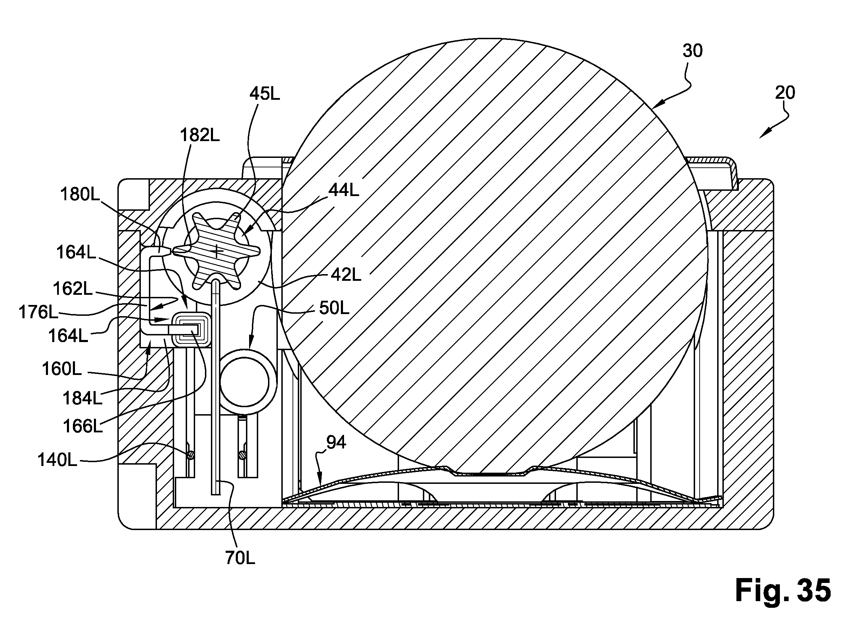

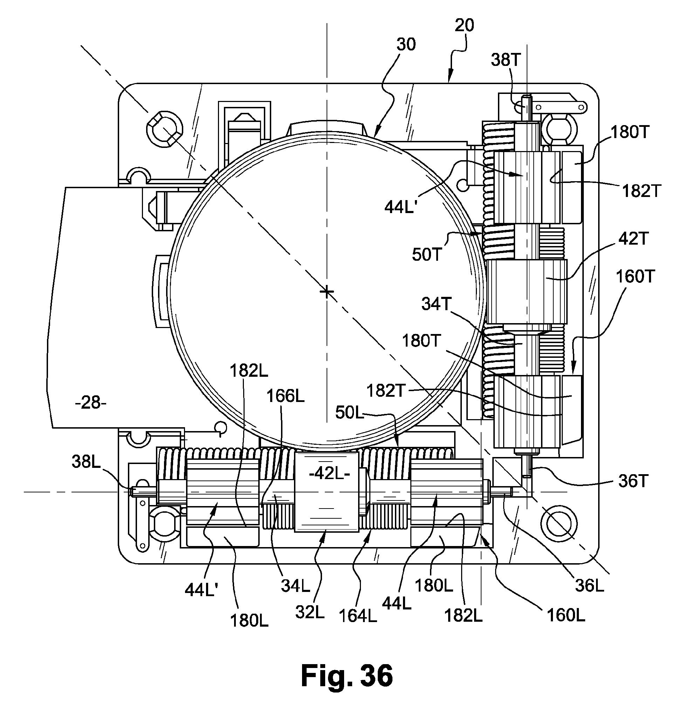

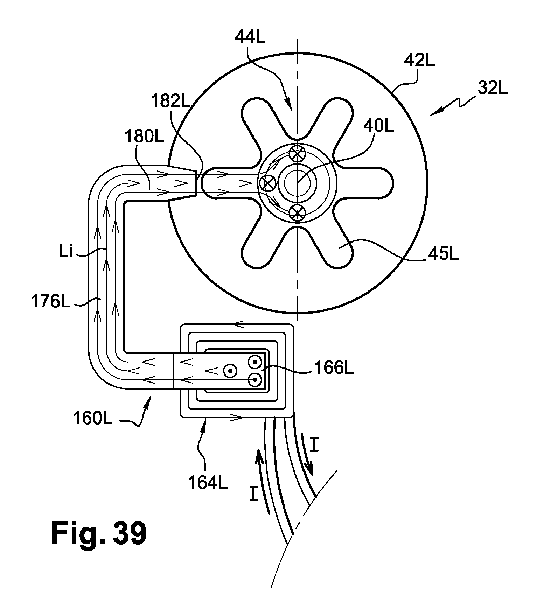

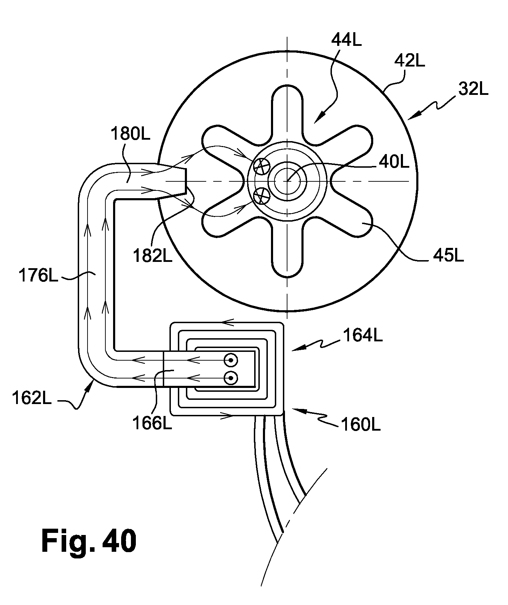

According to the third variant of the third embodiment, illustrated in Figures 35 to 40, the shaft carries an additional pinion 44L' of electromagnetic attraction of the shaft and it is associated with a single solenoid 160L with longitudinal cage 162L and coil 164L.

This is in fact a simplified solution as compared with the previous one consisting in the use of just one of the two longitudinal solenoids for the electromagnetic attraction of the shaft having two electromagnetic attraction control pinions, rear 44L and front 44L'.

Other designs according to the invention will now be described which call upon permanent magnetization of the control pinion and/or of the control shaft so as to diminish the electromagnetic forces of attraction or repulsion and to offer other design and shape options.

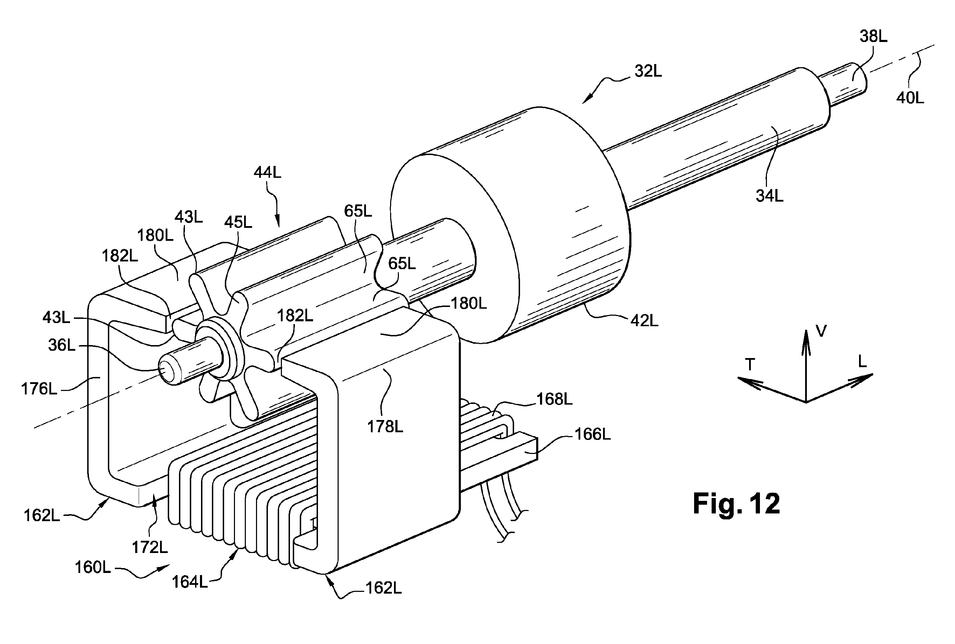

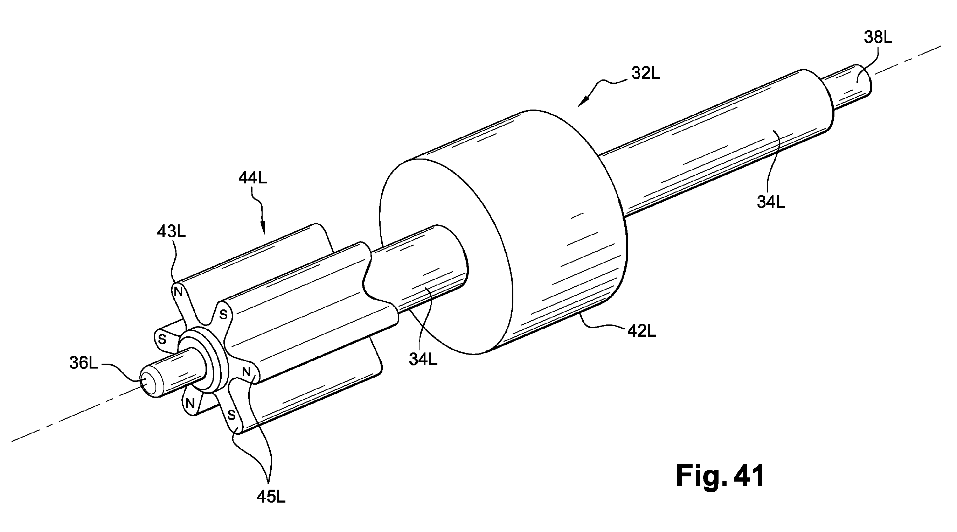

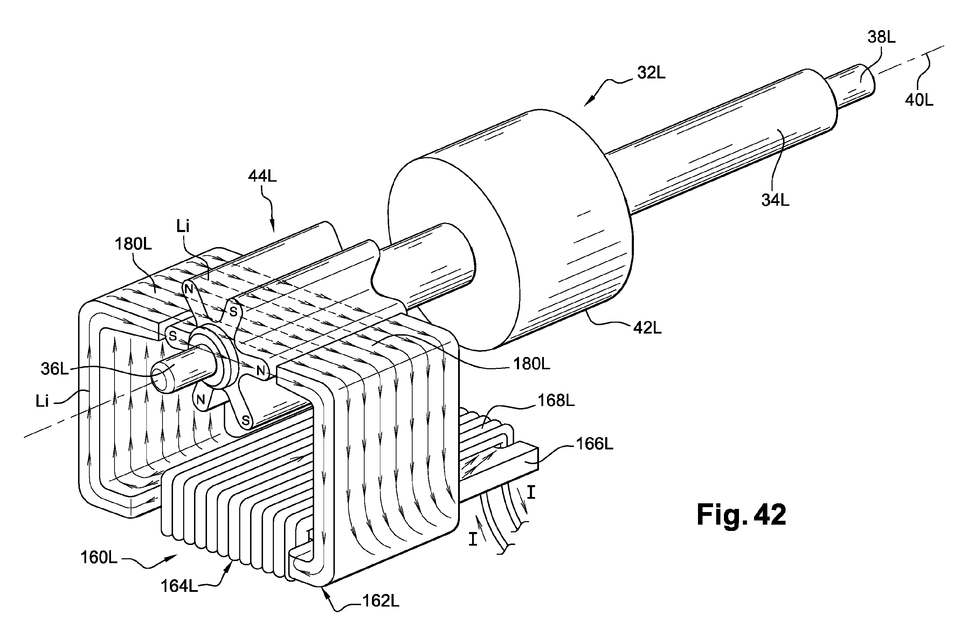

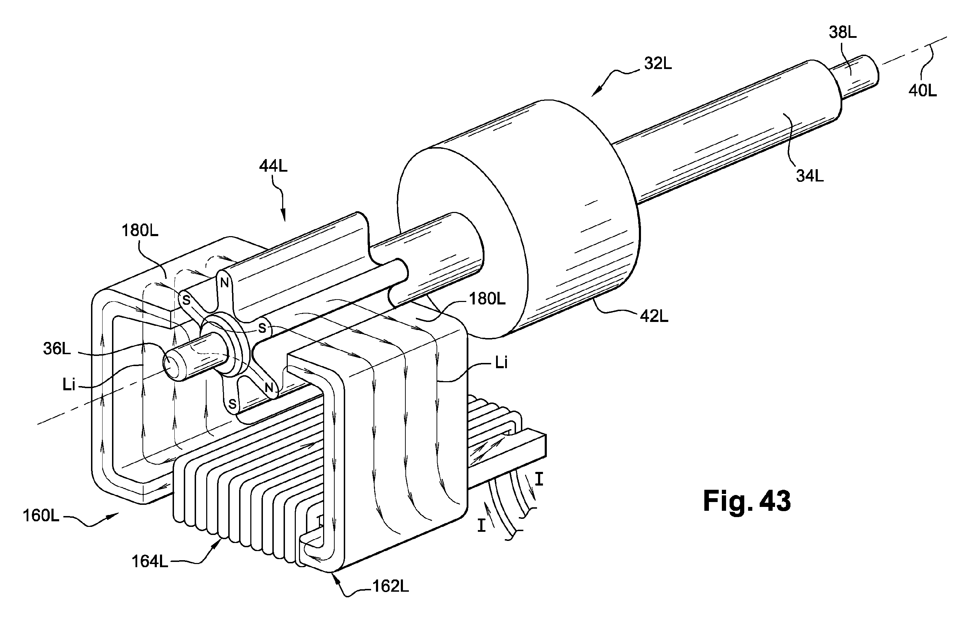

As may be seen in Figures 41 to 43, the teeth 45L of the control pinion 44L can be alternately transversely magnetized to constitute pairwise diametrically opposite north (N) and south (S) poles, in an arrangement similar to that represented in Figures 12, 13 and 15.

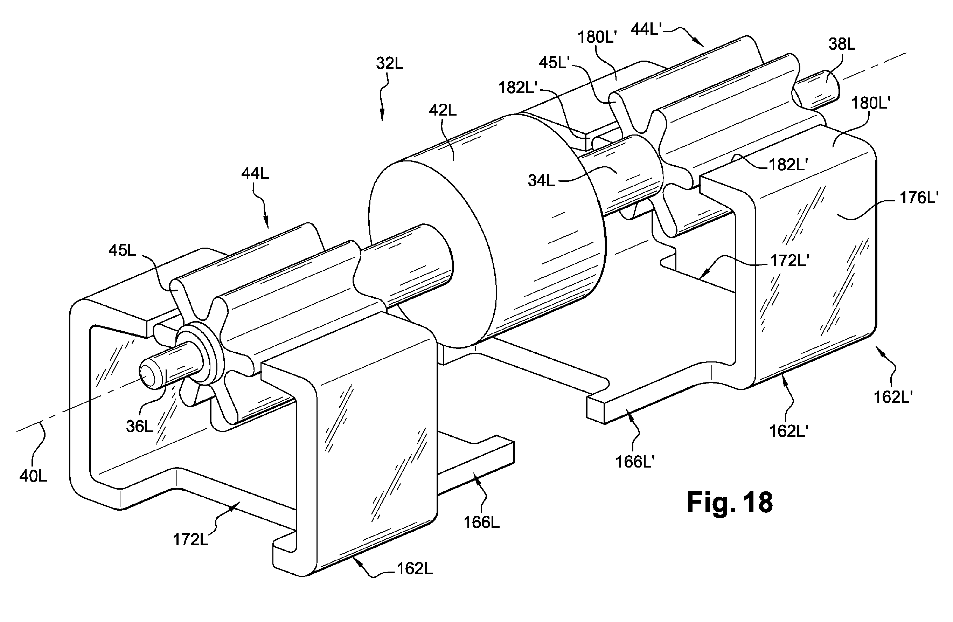

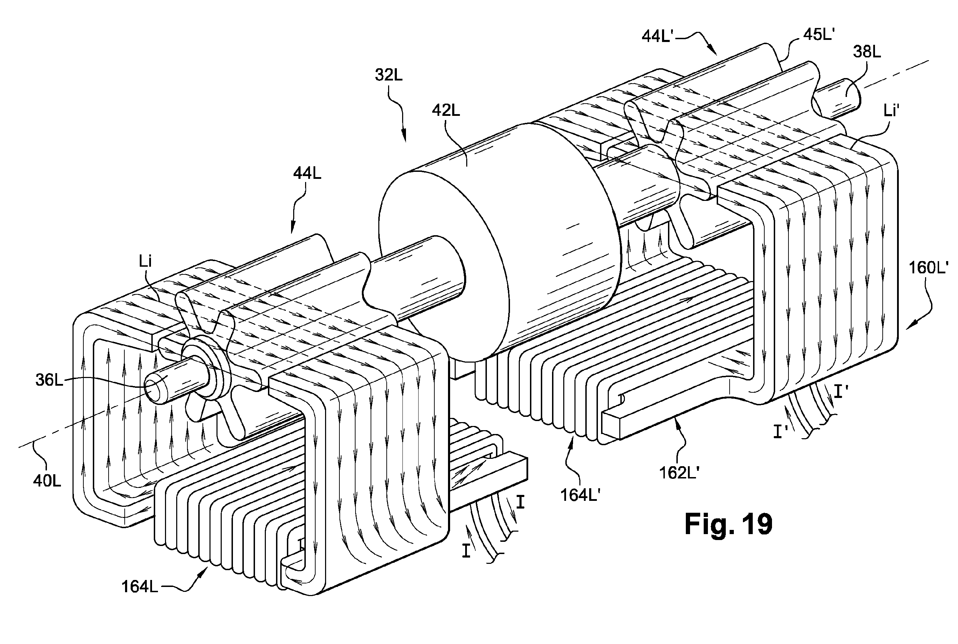

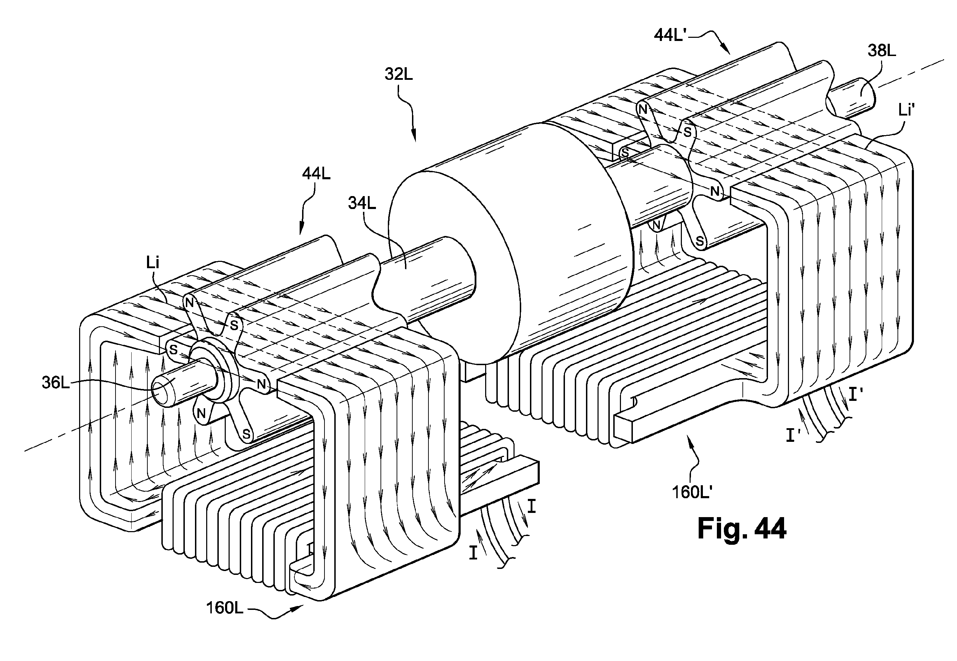

As may be seen in Figure 44, it is possible to do the same in respect of the teeth 45L' of the additional pinion 44L', in an arrangement similar to that represented in Figures 18 and 19.

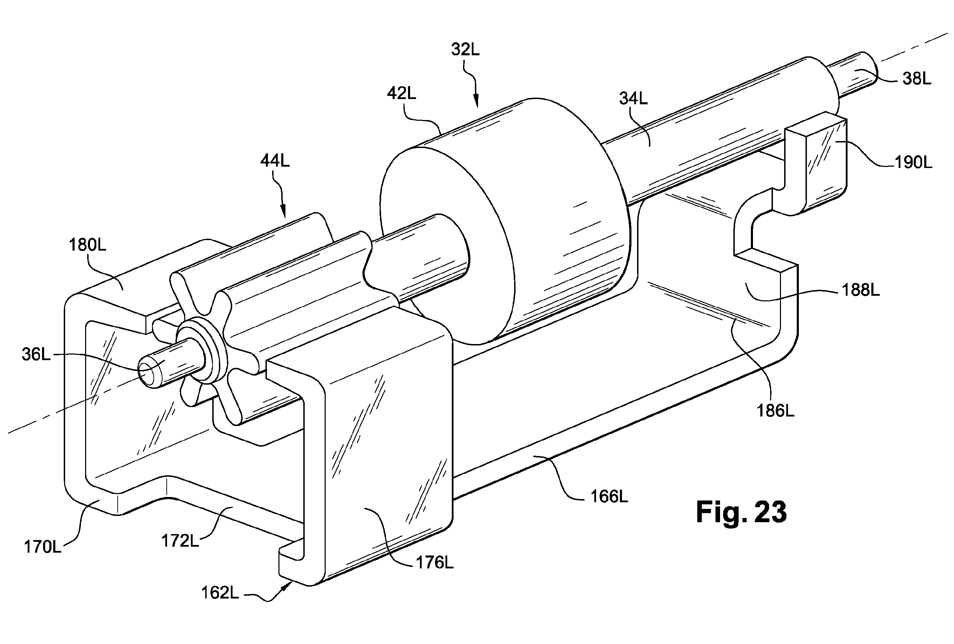

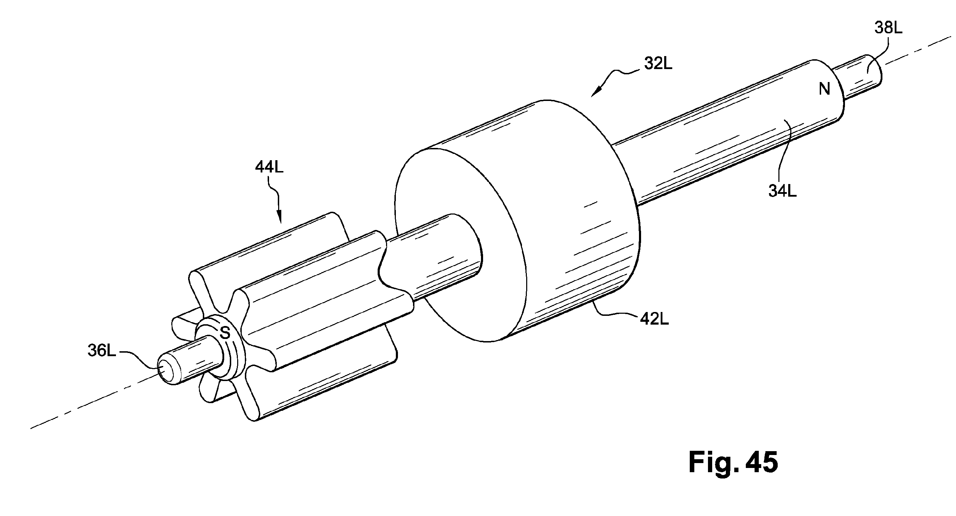

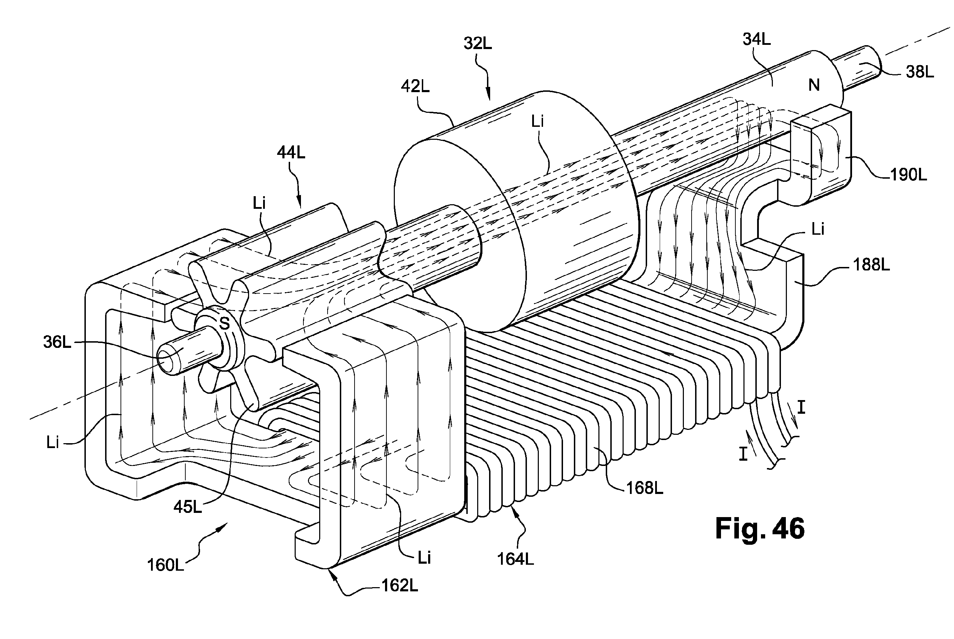

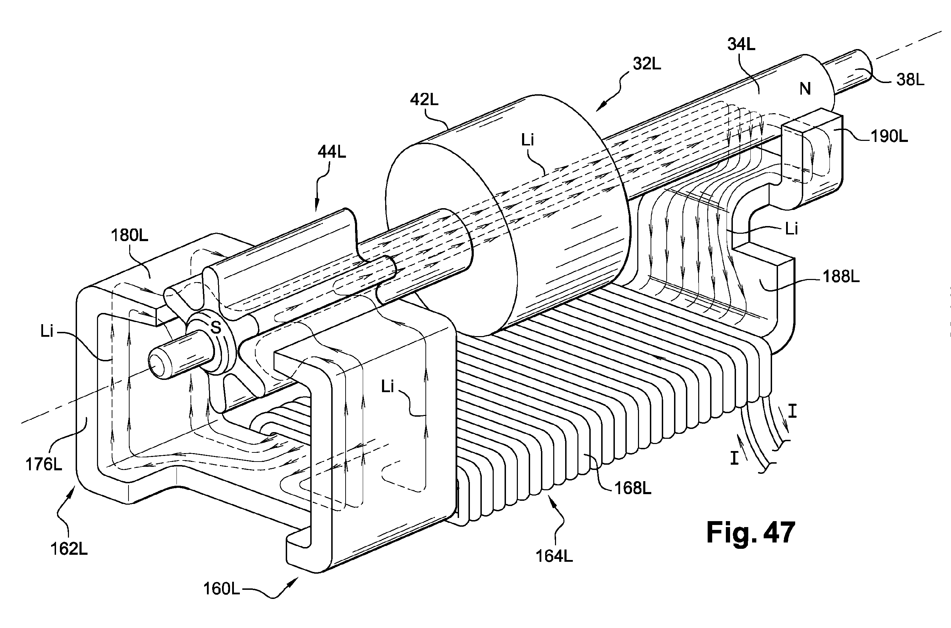

As may be seen in Figures 45 to 47, in an arrangement similar to that represented in Figures 23 to 26, it is possible to magnetize the body 34L of the shaft 32L longitudinally with a north pole (N) at its rear longitudinal end, and a south pole (S) at its front longitudinal end.

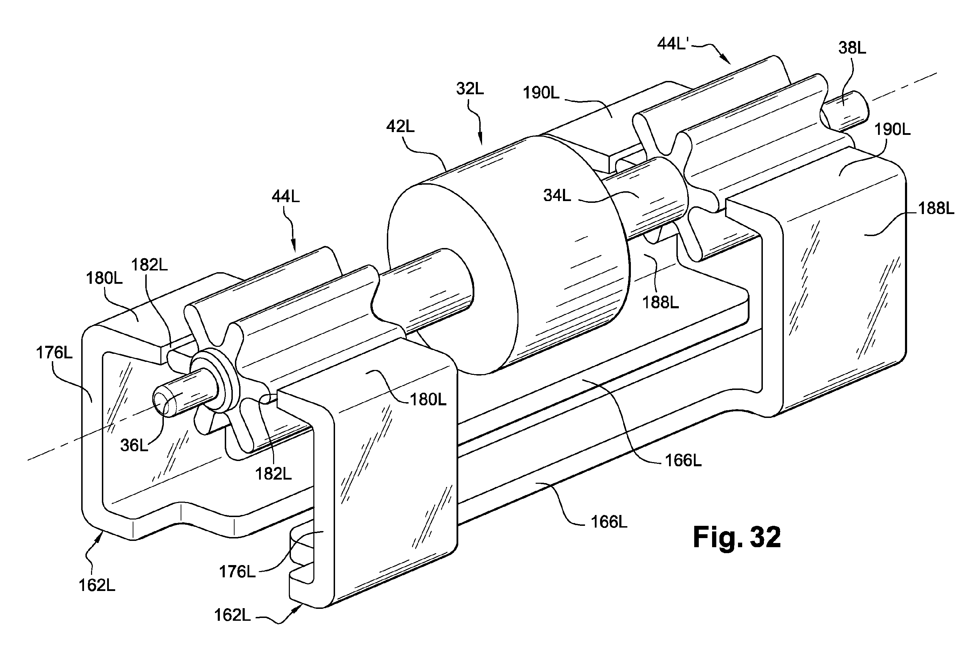

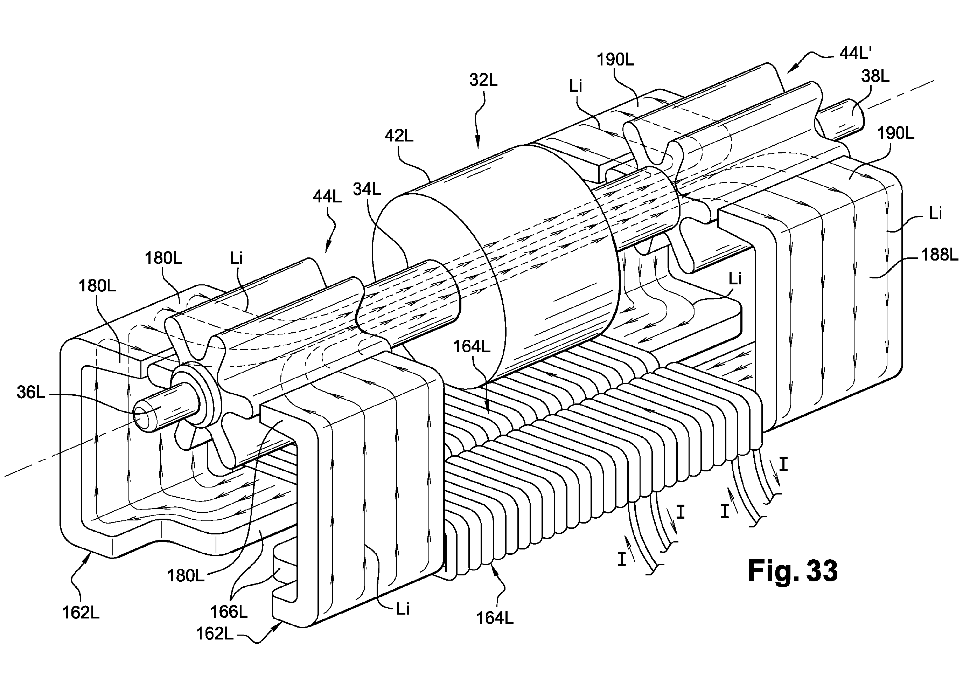

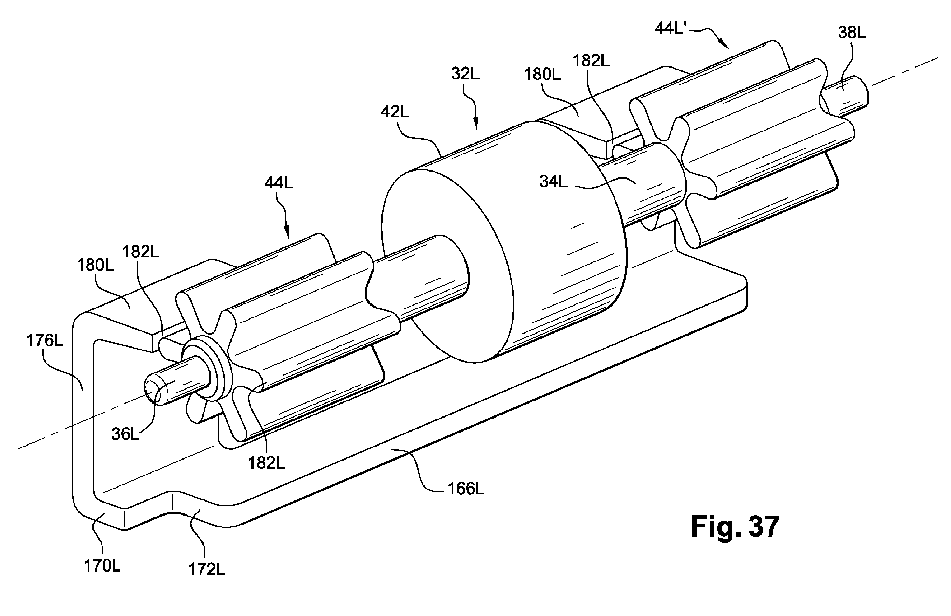

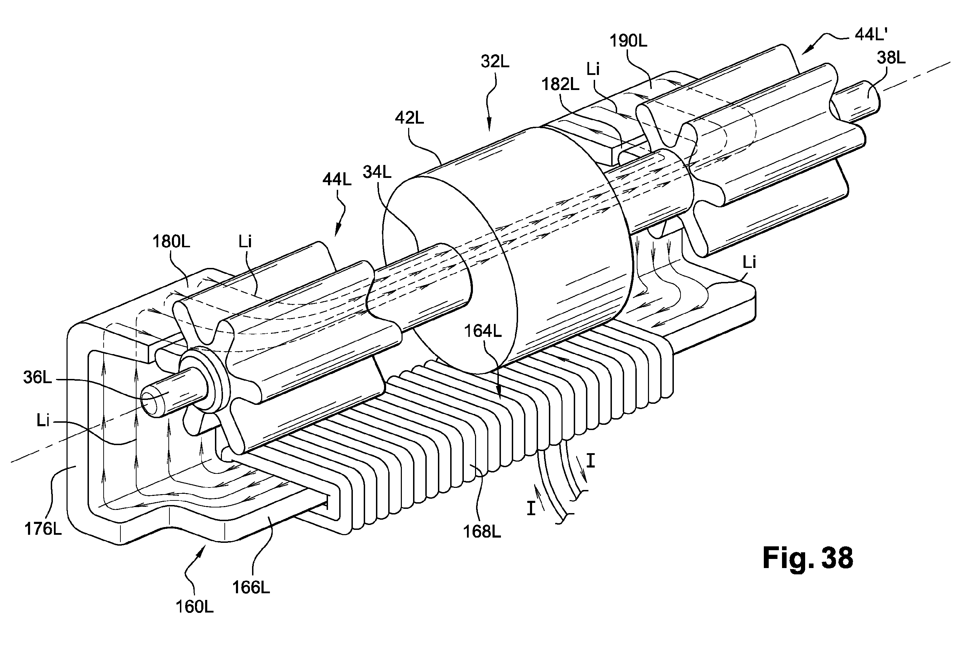

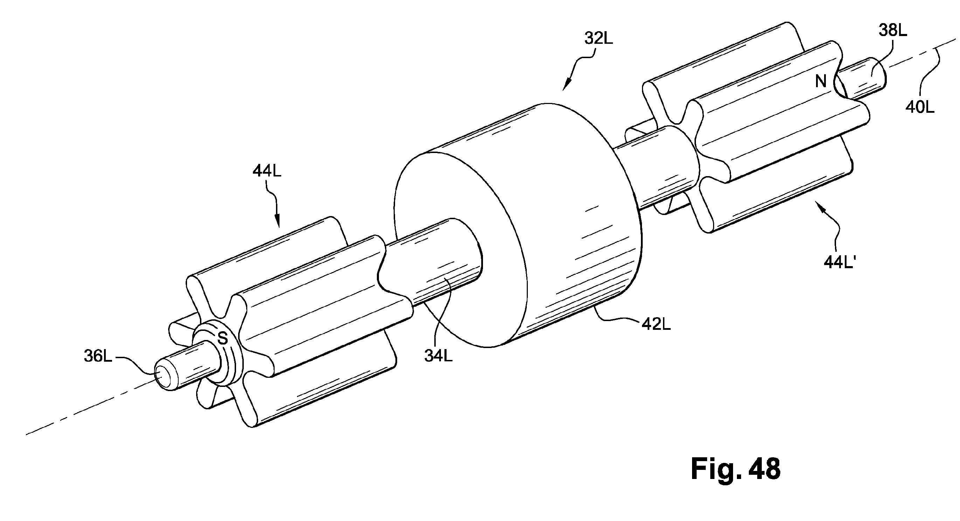

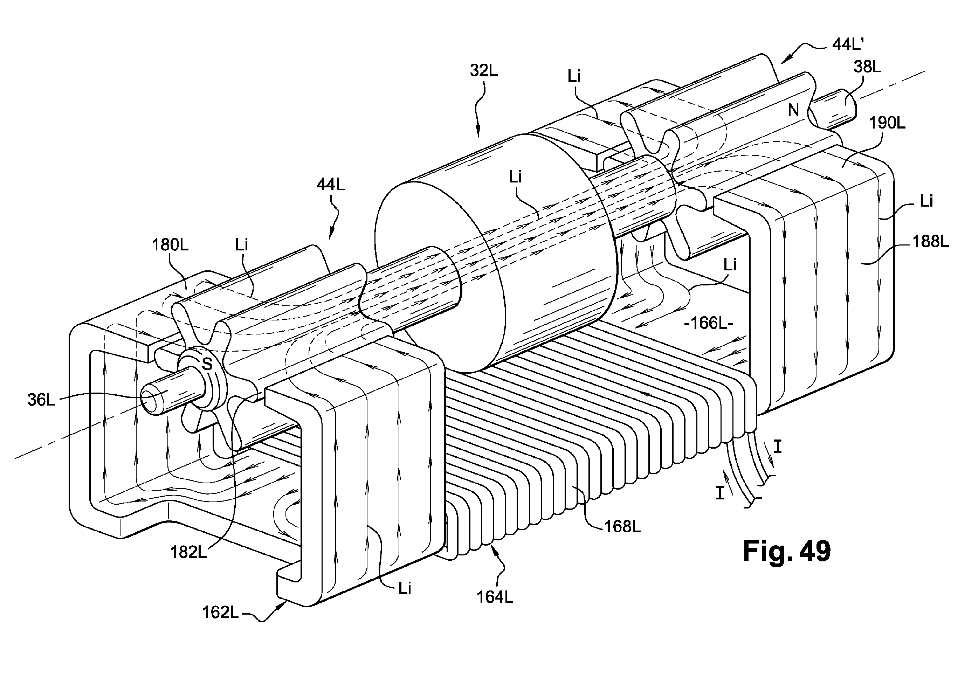

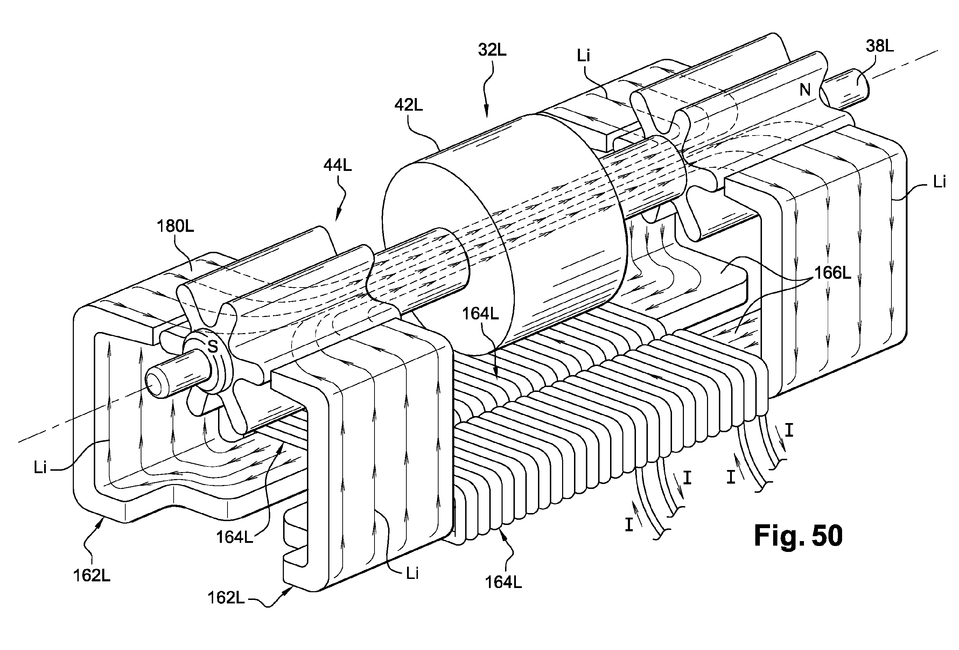

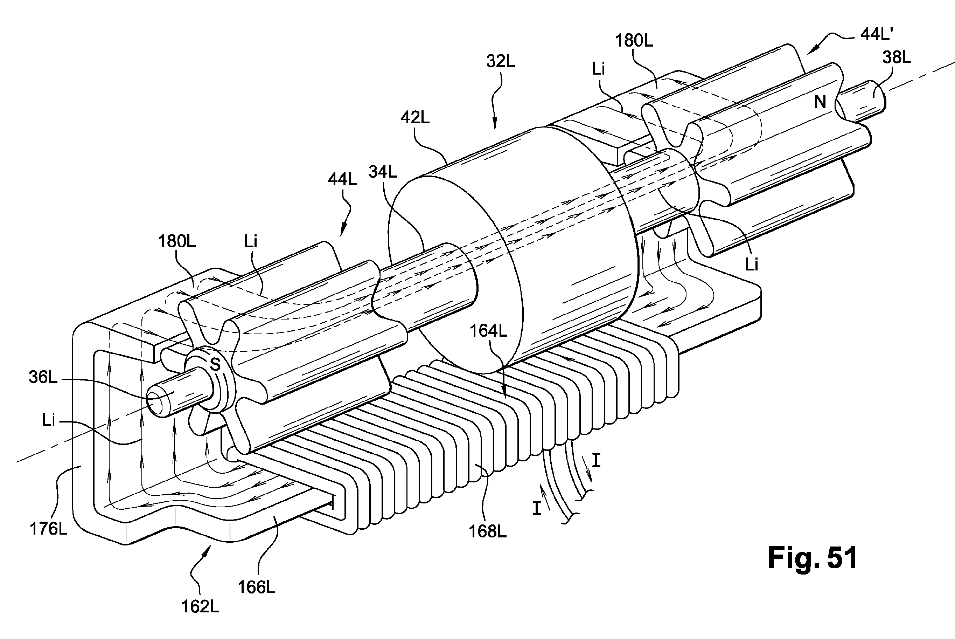

As illustrated in Figures 48 to 50, it is also possible to magnetize the shaft 32L, in an arrangement similar to that represented in Figures 32 and 33, or else, as illustrated in Figure 51, in an arrangement similar to that represented in Figures 37 and 38.

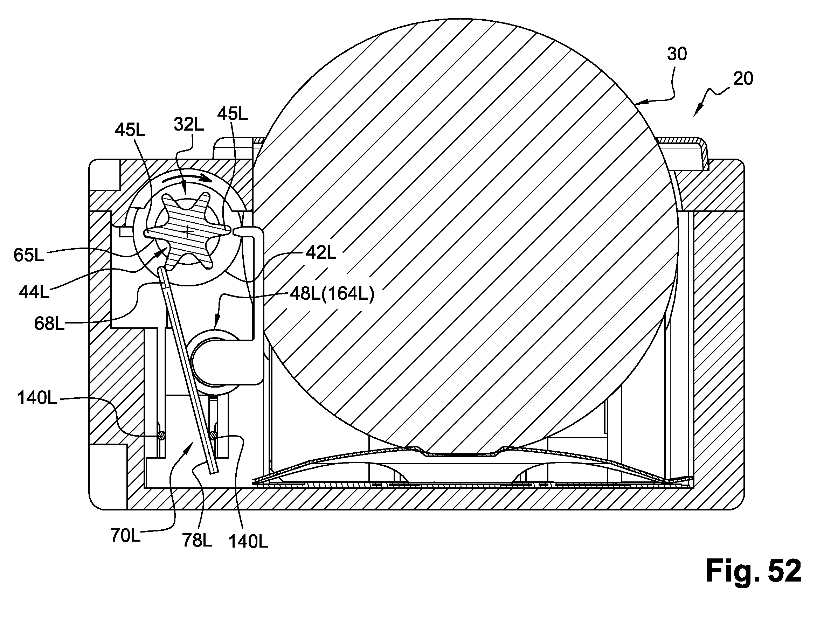

According to the sixth embodiment represented in Figures 52 et seq., it is also possible to replace the solenoid by the cylindrical main body 48L, 48T of the torsional spiral spring 50L, 50T made of wound metal wire.

The spring 50L, 50T, if an electric current flows through it, generates an electromagnetic field which can be guided by a core which stretches axially through the spring in the same way as the lower branch 166L, 166T and which is extended by polar branches.

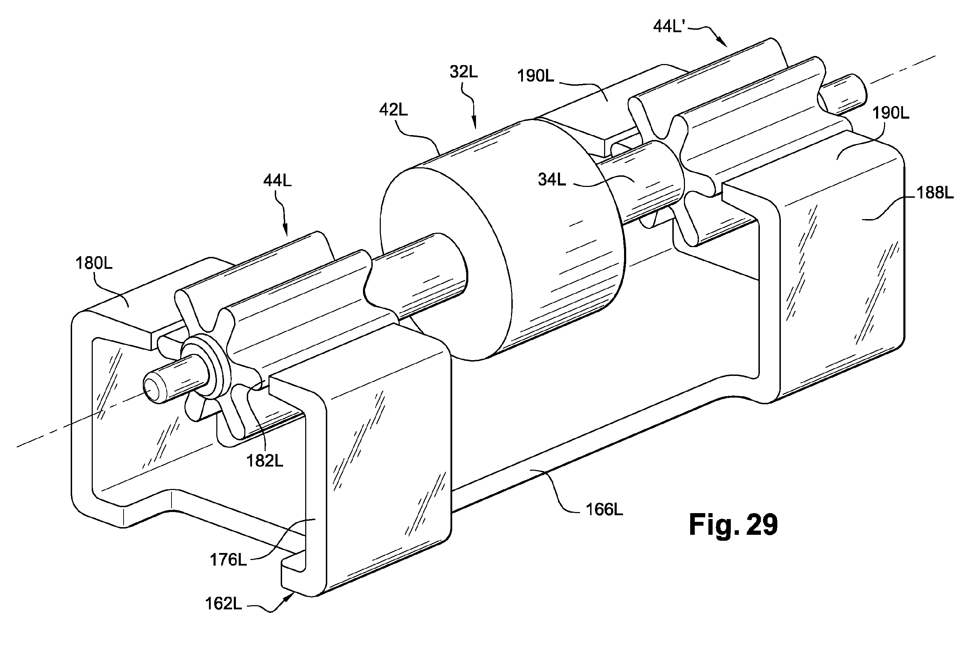

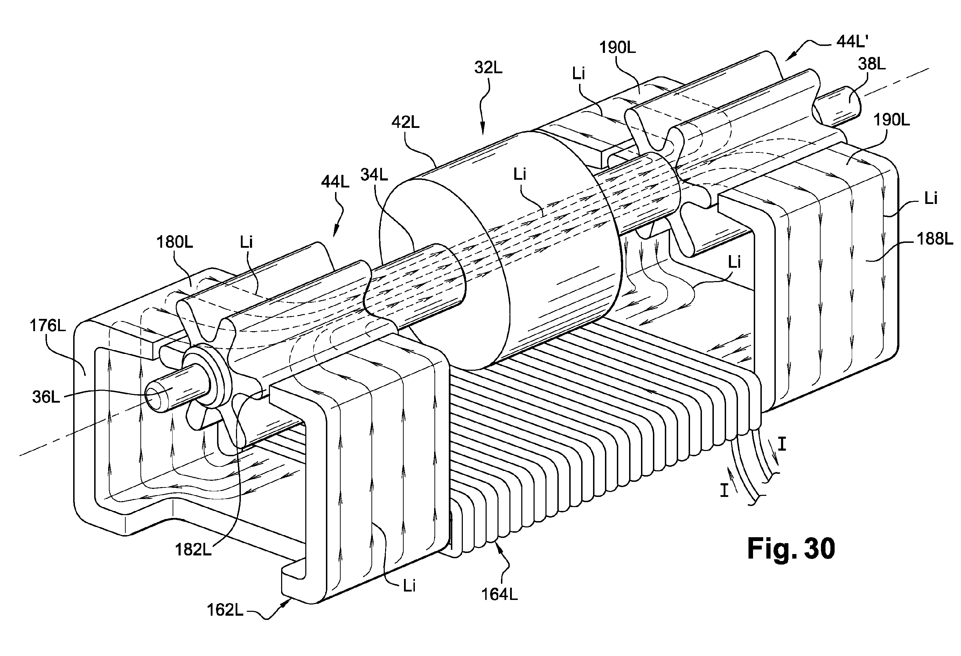

The control shaft 32L is of the type having two pinions 44L and 44L', as in Figures 29 and 30.

The longitudinal lower branch is a cylinder which passes through the body 48L of the spring 50L.

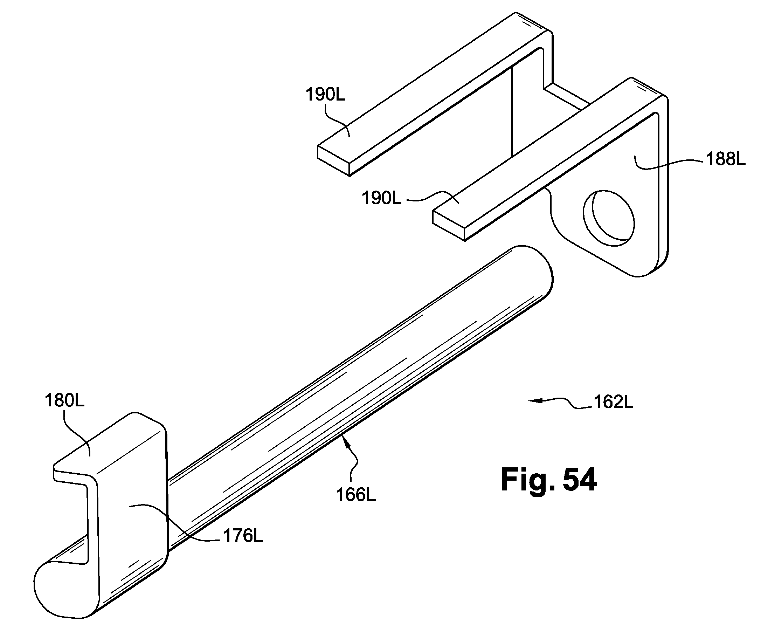

The yoke 162L is made in two parts, represented exploded in Figure 54 to allow assembly through the helical body of the spring.

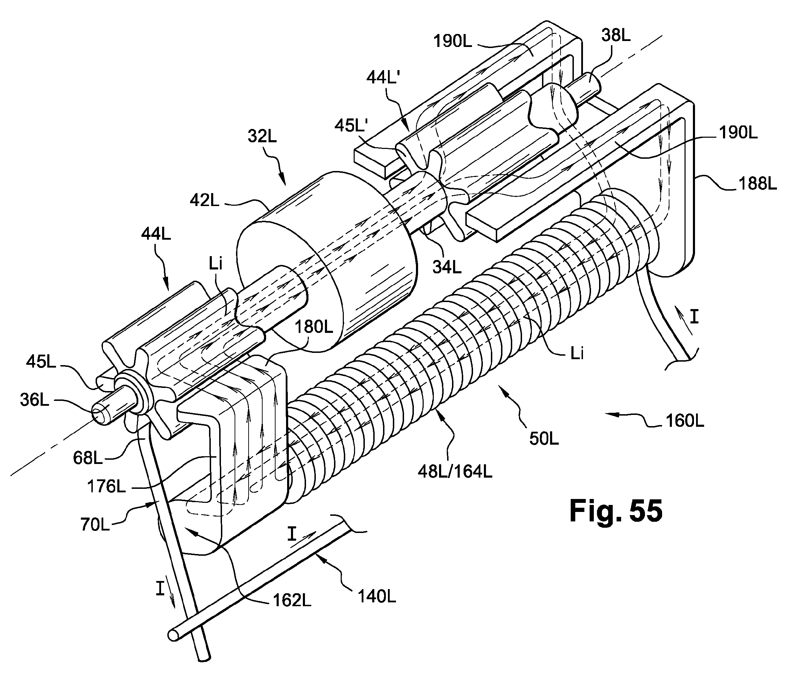

The two pieces are made for example of an iron-based alloy and they are then crimped so as to constitute, in association with the two-pinion control shaft, the electromagnetic assembly illustrated in Figure 55.

The spring 50L, 50T, via its moving contact branch, causes the formation of the signal and functions as solenoid with electrical energizing thereof via the moving rod itself.

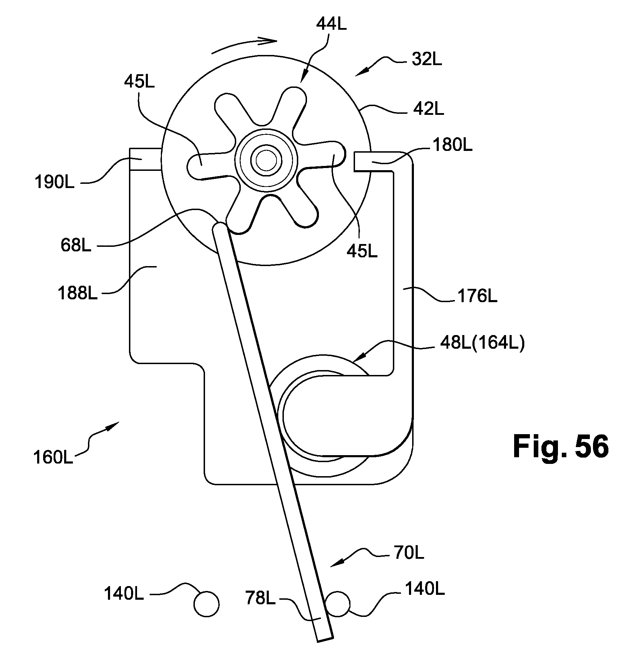

As may be seen in particular in Figure 56, the moving contact rod 70L is in contact with the associated fixed rod 140L so as to establish a mutual contact and cause the formation of a control pulse.

In this position, the diametrically opposite teeth 45L of the control pinion 44L and of the additional pinion 44L' are not yet aligned with the associated upper polar branches 180L and 190L.

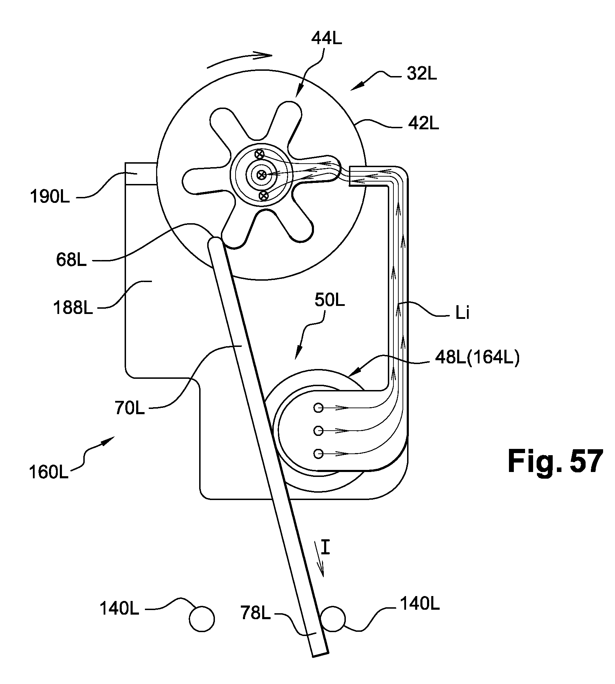

As may be seen in Figures 55 and 57, when the spring 50L is energized with an electric current "I" flowing in a determined direction, the electromagnetic forces of attraction tend to accelerate the rotation of the pinions and of the control shaft in the same direction as that resulting from the load applied to the ball 30 by the user which then experience a tactile sensation.

As soon as the electrical contact is broken between the rods 70L and 140L, the electrical circuit is automatically opened and there is no longer any electromagnetic attraction field. The user is then free to rotate the ball, and hence the shaft, freely in either direction.

If the direction chosen by the user is a direction "prohibited" by the programme of the controlled electronic apparatus, the programme can intensify the strength of the current to give the user a different tactile sensation and indicate to him that the chosen direction of rotation is not correct.

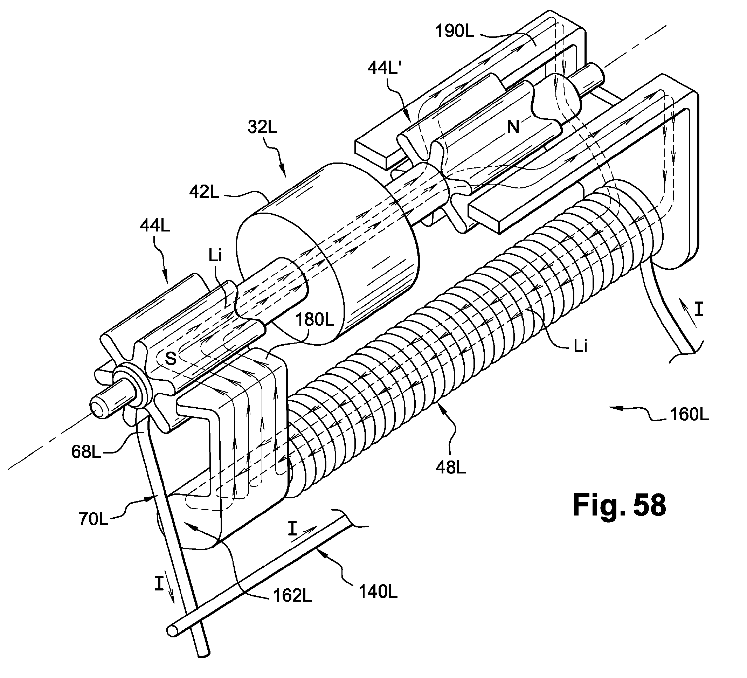

If the control shaft and its two pinions is permanently magnetized longitudinally as illustrated in Figure 58, it is possible, by reversing the direction of the current flowing through the spring 48L, 50L, to apply a repulsion force which opposes the "snap-fitting" of the upper end 68L during the approach to the upper polar branches by the pairs of diametrically opposite teeth of the pinions.

According to a variant implementation, a so-called "weak" current for the formation of the control pulse or signal, as in the state of the art, and a so-called "strong" current for the generation of the electromagnetic forces can be made to "flow" through the spring 48L, 50L at one and the same time.

When the device comprises means, such as light-emitting diodes described in document WO-A-02/075641, the turning on of which is controlled by the programmes of the electronic apparatus, it is possible to associate the implementation of the electromagnetic circuits according to the invention with the turning on of these means so as to provide the user with a visual indication or sensation associated and/or combined with the tactile sensations, for example to provide a visual signal indicating if the direction is correct but that a target has been reached, or vice versa.

The invention is in no way limited to the embodiments just described.

It finds application in particular to a control device with a single control shaft with control pinion, actuated directly by the user, or by way of a control ball, or of a drum carried by the control shaft, or a drum with parallel axis of rotation which co-operates with a roller of the control shaft.

## Claims

1. Control device (20) of the type comprising a generator of control signals, or pulses, for an electronic apparatus, in particular for the control of the movements of a cursor on a display screen of the apparatus, which comprises:
- a horizontal shaft (32L, 32T) which is mounted revolving in a housing (20, 24, 26) of the device and which is able to be driven in rotation about its axis (40L, 40T), directly or indirectly, by a manual actuation control member (30) mounted rotatably in the housing;
- and a toothed control pinion (44L, 44T) which is tied in rotation to the shaft (32L, 32T) and between two consecutive teeth (35L, 35T) of which is received an upper span of a moving contact rod in the rest position, in such a way as to cause the tilting of the contact rod (70L, 70T), in one or the other direction, when the shaft (32L, 32T) is driven in rotation so as to establish electrical contact between the contact rod and one or the other of two fixed contacts and thus generate a control signal, and to subsequently cause the automatic escape of the upper span from the space delimited by the two consecutive teeth (45L, 45T) beyond a determined angle of rotation of the associated control shaft (32L, 32T),
**characterized in that** the device comprises electromagnetic means (160L, 160T, 164L, 164T) which, when they are energized, apply an electromagnetic field to the signals generator pinion (44L, 44T) in such a way as to attract and/or to retain the control pinion in a determined angular position, and **in that** the electrical energizing of the said electromagnetic means (164L, 164T) is triggered by the generation by the pinion (44L, 44T) of a control signal corresponding to a determined state of the controlled apparatus, so as to thus afford the user a tactile sensation corresponding to the arising of this state.

2. Device according to the preceding claim, **characterized in that** the said electromagnetic means of attraction comprise a solenoid (160L, 160T) arranged in the housing (24, 184L, 184T) which is able to produce a magnetic field (Li) when it is energized, and **in that** the control pinion (44L, 44T) is made of iron or of a ferromagnetic material and is disposed in the magnetic field.

3. Device according to the preceding claim, **characterized in that** field lines (Li) of the magnetic field are oriented in a direction orthogonal to the axis of rotation of the control pinion (44L, 44T) in such a way as to cross the latter.

4. Device according to the preceding claim, **characterized in that** field lines (Li) of the magnetic field lie substantially in a diametral plane of the control pinion (44L, 44T).

5. Device according to any one of Claims 2 to 4, **characterized in that** the control pinion (44L, 44T) comprises an even number of teeth (45L, 45T) which are diametrically opposed pairwise.

6. Device according to any one of Claims 2 to 4, **characterized in that** the control pinion (44L, 44T) comprises an odd number of teeth.

7. Device according to any one of Claims 2 to 6, **characterized in that** the solenoid (160L, 160T) comprises a yoke (162L, 162T) which comprises at least one lower horizontal branch (166L, 166T) about which is wound the coil (164L, 164T) of the solenoid and which is extended by at least one upper horizontal branch (180L, 180T) whose free end edge (182L, 182T) lies axially facing the exterior envelope (43L, 43T) of the teeth (45L, 45T) of the control pinion (44L, 44T).

8. Device according to the preceding claim, **characterized in that** the lower horizontal branch (166L, 166T) of the yoke (162L, 162T) is extended by two opposite upper horizontal branches (180L, 180T) whose opposite free end edges (182L, 182T) delimit a gap (e) in which the control pinion (44L, 44T) is accommodated.

9. Device according to either of Claims 7 and 8, taken in combination with Claim 4, **characterized in that** the horizontal upper branch (180L, 180T) lies in the plane of the axis (40L, 40T) of rotation of the control pinion (44L, 44T).

10. Device according to any one of Claims 7 to 9, **characterized in that** the axial width of the horizontal upper branch (180L-182L, 180T, 182T) is substantially equal to the axial length of the teeth (45L, 42T) of the control pinion (44L, 44T).

11. Device according to any one of Claims 7 to 10, **characterized in that** the yoke (162L, 162T) is made of a ferromagnetic material.

12. Device according to any one of the preceding claims, **characterized in that** the control shaft carries an additional magnetic attraction pinion (44L', 44T') similar to the control pinion (44L, 44T) and tied in rotation to the control shaft (32L-34L, 32T-34T).

13. Device according to any one of the preceding claims, **characterized in that** the control pinion (44L, 44T) is a transversely polarized magnet.

14. Device according to any one of Claims 1 to 13, **characterized in that** the longitudinal control shaft (32L-34L, 32T-34T) is a longitudinally polarized magnet.

15. Device according to any one of the preceding claims, **characterized in that** it comprises luminous means able to provide a visual indication to the user, the energizing of which is controlled in association with the electrical energizing of the said electromagnetic means.

16. Device according to Claim 7, **characterized in that** the moving contact rod (70L, 70T) is tied in rotation to the last turn of an axial end of a torsional spiral spring (50L, 50T), made of metal wire, of horizontal axis, the cylindrical body (48L, 48T) of which is accommodated in the housing, the other end (58L, 58T) of which is blocked in rotation, and **in that** the said cylindrical body (48L, 48T) constitutes the said coil (164L, 164T) of the solenoid.

17. Device according to the preceding claim, **characterized in that** it comprises two orthogonal revolving control shafts (32L, 32T) driven in rotation, each in both directions, by a control ball (30) mounted rotatably in the housing, each shaft being tied in rotation to a control pinion (44L, 44T) belonging to a control signals generator, and **in that** the control pinion of each control shaft is associated with controlled electromagnetic means (160L, 160T) of attraction in rotation of the control pinion (44L, 44T).
